# EUROPEAN PATENT SPECIFICATION

(11) **EP 3 410 327 B1**
(45) Date of publication and mention of the grant of the patent: **27.09.2023**
(21) Application number: 17759096.5
(22) Date of filing: 07.02.2017
(51) Int. Cl.: G06F 21/10, H04L 9/32, H04L 9/00, G06Q 10/10, G06Q 50/18

(54) **RIGHTS MANAGEMENT METHOD AND SYSTEM**
VERFAHREN UND SYSTEM ZUR VERWALTUNG VON RECHTEN
PROCÉDÉ ET SYSTÈME DE GESTION DE DROITS

(30) Priority: 01.03.2016 CN 201610116238
(43) Date of publication of application: 05.12.2018
(73) Proprietor: Huawei Technologies Co., Ltd., Longgang District Shenzhen, Guangdong 518129 (CN)
(72) Inventor: CHEN, Yixin, Shenzhen Guangdong 518129 (CN); WEN, Junrong, Shenzhen Guangdong 518129 (CN); LIU, Deqian, Shenzhen Guangdong 518129 (CN); ZHANG, Pu, Shenzhen Guangdong 518129 (CN)
(74) Representative: Körber, Martin Hans
(86) International application number: PCT/CN2017/073053
(87) International publication number: WO 2017/148245

(56) References cited:
- WO-A1-2015/024129
- CN-A- 1 858 762
- CN-A- 101 408 922
- CN-A- 105 303 069
- GB-A- 2 514 716
- US-A1- 2010 111 298
- US-A1- 2014 136 427
- Satoshi Nakamoto: "Bitcoin: A Peer-to-Peer Electronic Cash System", , 31 October 2008 (2008-10-31), pages 1-9, XP055387899, Retrieved from the Internet: URL:http://nakamotoinstitute.org/static/do cs/bitcoin.pdf [retrieved on 2017-07-04]
- LI, SHAOMIN et al.: "qulkuai4lian4 duolmei2ti3 shu4ju4ban3quan2 bao3hu4 fanglfa3 yan2jiul", Science & Technology Information, 20 December 2015 (2015-12-20), page 13 and 15,

## Description

### TECHNICAL FIELD

This application relates to the field of digital copyright management technologies, and in particular, to a copyright management method and system.

### BACKGROUND

Digital rights management (Digital Rights Management, DRM for short) is a technology that is developed as electronic audio and video programs are extensively spread on the Internet. Its purpose is to protect digital content copyrights, and technically prevent illegal reproduction of digital content, or make reproduction difficult to some extent, so that an end user can use the digital content only after being authorized. DRM protects digitalized products such as software, music, and movies, so that use of an instance is restricted, and that a right to use the digital content can be controlled and restricted. In this way, the digital content copyrights are effectively protected, lawful revenues of digital content owners are protected, enthusiasm of digital content creators is enhanced, and digital content development is stimulated.

A basic operating principle of the conventional DRM technology is as follows: First, a digital content authorization center, for example, a copyright issuer (Rights Issuer) is created, and then original digital content is encrypted and packed. After being encrypted and packed, the digital content has its independent ID and an encryption key. After a user obtains the encrypted digital content, the user cannot directly use the digital content, and must apply for and purchase content use authorization from the digital content authorization center, where authorization information includes content such as a decryption key and use restrictions.

Although the conventional DRM technology can control and restrict the right to use the digital content and therefore effectively protect the digital content copyright, from interests of a creator and a capability of controlling copyright authorization, the conventional DRM technology has the following disadvantages:
The creator submits the digital content to a DRM system. However, because the conventional DRM system is controlled by a content distributor and is not a system having extensive public trust, the content distributor may tamper with data in a copyright management process. Consequently, copyright management is untrusted and nontransparent, and lacks security.

WO 2015/024129 A1 discloses a method for transferring ownership of digital artworks based on Bitcoin technique. GB 2 514 716 A discloses a method for monitoring third party access to a restricted item by monitoring a store of value. US 2014/0136427 A1 discloses a method for distributed license management, where three or more services or servers cooperate and negotiate with one another to establish licensing services. Satoshi Nakamoto, "Bitcoin: A Peer-to-Peer Electronic Cash System", (20081031), pages 1 - 9, URL: http://nakamotoinstitute.org/static/docs/bitcoin.pdf, (20170704), XP055387899, introduces an electronic payment system based on cryptographic proof, which is called Bitcoin.

### SUMMARY

Embodiments of this application provide a digital content copyright management method and system to make copyright management trusted, transparent, and secure.

The present invention is defined in the appended independent claims. Further implementations are disclosed in the appended dependent claims.

According to a first aspect, an embodiment of this application provides a digital content copyright management method, including: receiving, by any blockchain apparatus in a plurality of blockchain apparatuses in a P2P network, a copyright processing request, and constructing a copyright management transaction according to the copyright processing request; and storing the copyright management transaction in a blockchain for processing, where the blockchain is stored in all blockchain apparatuses. Because all blockchain apparatuses check the copyright processing request, and the copyright management transaction is constructed only when the check is successful, correctness and legality of a copyright processing operation are ensured. Because the copyright management transaction is persistently processed, once the copyright management transaction is persistently stored, it is difficult to change the copyright management transaction. Therefore, unchangeability of the copyright management transaction and uniqueness of a time proof are ensured. Herein it is further explained that persistency may be understood as writing, or adding, or the like, or may be understood as permanently storing a copyright management transaction.

In a possible design, the storing the copyright management transaction in a blockchain for processing may be specifically: sending, by any blockchain apparatus in the P2P network, the copyright management transaction to a persistent blockchain apparatus in a trusted network, where the copyright management transaction is already checked by the any blockchain apparatus. In this case, the persistent blockchain apparatus further needs to check the copyright management transaction, and when the copyright management transaction checked successfully is at least one copyright management transaction, the persistent blockchain apparatus constructs all the at least one copyright management transaction that is checked successfully into a block, and sends the constructed block to all blockchain apparatuses in the trusted network except the persistent blockchain apparatus for performing a block check, where the block includes an identifier of a previous block linked in blockchain data, a time at which the block is generated, and the at least one copyright management transaction; the persistent blockchain apparatus receives block check responses returned by all the blockchain apparatuses in the network, determines, according to the received block check responses, that the block check is successful (for example, a ratio of successfully received block check responses is higher than 80%), and stores (persistently stores) the block in the current blockchain; and the persistent blockchain apparatus instructs all the blockchain apparatuses in the network to synchronize the persistently stored block. Before the copyright management transaction is persistently stored in the blockchain, the copyright management transaction and the block need to be checked by all the blockchain apparatuses in the network. Therefore, it should be considered that the copyright management transaction persistently stored in the blockchain can be trusted. In addition, after the copyright management transaction is persistently stored, the blockchain is stored in all the blockchain apparatuses in the network. Therefore, if a blockchain apparatus wants to tamper with the copyright management transaction secretly, other blockchain apparatuses in the network do not agree, and the copyright management transaction cannot be tampered, that is, the copyright management transaction in the blockchain is trusted and secure. In this solution, the persistent blockchain apparatus is pre-elected. Therefore, any blockchain apparatus that successfully checks a copyright management transaction in the network sends the copyright management transaction to the persistent blockchain apparatus. In a possible design, the storing the copyright management transaction in a blockchain for processing may also be specifically: sending, by any blockchain apparatus in the network, the copyright management transaction to all blockchain apparatuses in a trusted network except the blockchain apparatus itself; further receiving, by all blockchain apparatuses in the trusted network, at least one copyright management transaction sent by any one or a plurality of blockchain apparatuses in the trusted network; electing, from all blockchain apparatuses in the trusted network, a blockchain apparatus to be a persistent blockchain apparatus, and creating an election transaction; then constructing, by the elected persistent blockchain apparatus, the at least one copyright management transaction and the election transaction into a block, and storing the block in the current blockchain; and instructing, by the persistent blockchain apparatus, all the blockchain apparatuses in the network to synchronize the stored block. Before the copyright management transaction is persistently stored, the copyright management apparatus and the block need to be checked by all the blockchain apparatuses in the network before being persistently stored in the blockchain. Therefore, it should be considered that the copyright management transaction persistently stored in the blockchain can be trusted. In addition, after the copyright management transaction is persistently stored, the blockchain is stored in all the blockchain apparatuses in the network. Therefore, if a blockchain apparatus wants to tamper with the copyright management transaction secretly, other blockchain apparatuses in the network do not agree, and the copyright management transaction cannot be tampered, that is, the copyright management transaction in the blockchain is trusted and secure. In this solution, the persistent blockchain apparatus is elected periodically. Only after the election can the persistent blockchain apparatus persistently process at least one copyright management transaction that is not persistently stored in the network.

In a possible design, the copyright processing request is specifically a copyright registration request, and the copyright registration request includes an address of an owner of a copyright, identity information of a creator, identity information of the owner of the copyright, basic information of digital content, descriptions about a situation of rights of a work, and a digital content identifier; and the specific process of checking the copyright processing request in the foregoing solution may include: determining, by the blockchain apparatus, that content included in the copyright registration request is complete; and determining, according to the digital content identifier, that the copyright is not registered. The blockchain apparatus checks the copyright registration request to ensure authenticity of copyright registration.

In a possible design, the constructing a copyright management transaction specifically includes: setting input content included in the copyright management transaction to null, and setting output content to the address of the owner of the copyright in copyright registration. During copyright registration, there is no information about the copyright in the blockchain, that is, the copyright is new. Therefore, the input content is null, and the output content is the address of the owner of the copyright. Therefore, after registration, that the copyright belongs to the owner of the copyright may be recorded in the blockchain.

In a possible design, the copyright processing request is specifically a copyright transfer request, and the copyright transfer request includes an identifier of a transaction of a to-be-transferred copyright and a signature of an owner of the copyright; and the checking the copyright processing request specifically includes: determining, according to the identifier of the transaction of the to-be-transferred copyright, that the copyright is not transferred, and determining, according to the signature of the owner of the copyright, that the owner of the copyright owns the copyright. Before the copyright is transferred, the blockchain apparatus checks that the copyright is already transferred or checks the signature of the owner of the copyright is correct; and if the copyright is already transferred or the signature of the owner of the copyright is incorrect, the copyright transfer cannot be implemented. Therefore, it is ensured that the copyright transfer is reasonable and correct.

In a possible design, the constructing a copyright management transaction may include: setting input content included in the copyright management transaction to the transaction identifier of the copyright transaction carrying the copyright before the copyright is transferred and the signature of the owner of the copyright before the copyright is transferred, and setting output content to an address of an owner of the copyright after the copyright is transferred.

In a possible design, the copyright processing request is specifically a product addition request, and the product addition request includes an address of an owner of a copyright, an identifier of a transaction of the copyright, price information, and a signature of the owner of the copyright; and the checking the copyright processing request specifically includes: determining, according to the identifier of the transaction of the copyright, that the copyright is not transferred; and determining, according to the signature of the owner of the copyright, that the owner of the copyright owns the copyright. By determining whether the owner of the copyright owns the copyright and determining the signature, the blockchain apparatus can determine whether a copyright processing requester is qualified to add the product.

In a possible design, the constructing a copyright management transaction may include: setting input content in a product transaction to the transaction identifier of the copyright transaction currently carrying the copyright and the signature of the owner of the copyright, and setting output content to an address of an owner of the added product.

In a possible design, the copyright processing request is specifically a product abandoning request, and the product abandoning request includes a transaction identifier of a transaction carrying a to-be-abandoned product and a signature of an owner of the to-be-abandoned product; and the checking the copyright processing request specifically includes: determining, according to the transaction identifier of the transaction carrying the to-be-abandoned product, that the product is not abandoned; and determining, according to the signature of the owner of the to-be-abandoned product, that an owner of the copyright owns the product. By determining whether the owner of the copyright owns the copyright and determining the signature, the blockchain apparatus can determine whether a copyright processing requester is qualified to add the product.

In a possible design, the constructing a copyright management transaction may include: setting input content included in the product transaction to the transaction ID of the product transaction carrying a to-be-abandoned asset and a signature of an owner of the to-be-abandoned asset, and setting output content to null.

In a possible design, the copyright processing request is specifically a license issuance request, and the license issuance request includes an identifier of a product transaction carrying a product to which a to-be-issued license belongs, and a signature of a product owner that owns the product; and the checking the copyright processing request specifically includes: determining, according to the identifier of the product transaction carrying the product to which the to-be-issued license belongs, that the product is not abandoned; and determining, according to the signature of the product owner that owns the product, that an owner of the copyright owns the product. By determining whether the product is abandoned and determining the signature, whether the current product is valid and whether the license may be issued can be determined.

In a possible design, the constructing a copyright management transaction may include: setting input content included in a license transaction to the transaction identifier of the product transaction carrying the product and the signature of the product owner, and setting output content to an address of an owner of the issued license.

In a possible design, the copyright processing request is specifically a license distribution request, and the license distribution request includes an identifier of a product transaction carrying a product to which a to-be-issued license belongs and a signature of an owner of the license before the distribution; and the checking the copyright processing request specifically includes: determining, according to the identifier of the product transaction of the product to which the to-be-issued license belongs, that the product is not abandoned; and determining, according to a signature of a product owner that owns the product, that an owner of the copyright owns the product.

In a possible design, the constructing a copyright management transaction may include: setting input content included in a license transaction to the transaction identifier of the product transaction carrying the product and the signature of the product owner, and setting output content to an address of an owner of the issued license.

According to a second aspect, an embodiment of the present invention provides a digital content copyright processing method, including: receiving, by a copyright processing apparatus (or a license processing apparatus), a copyright processing request, constructing a copyright management transaction according to the copyright processing request, and sending the copyright management transaction to a corresponding blockchain processing apparatus; and after receiving the copyright management transaction, storing, by the blockchain processing apparatus, the copyright management transaction in a blockchain for processing, where the blockchain is stored in all blockchain processing apparatuses in a network. The copyright processing apparatus (or the license processing apparatus) checks the copyright processing request, and the blockchain processing apparatus persistently stores the copyright management transaction, so that the copyright management transaction in the blockchain is trusted and secure.

In a possible design, the storing the copyright management transaction in a blockchain for processing may be specifically: sending, by any copyright processing apparatus (or the license processing apparatus) in the network, the copyright management transaction that is checked successfully to a copyright processing apparatus (or a license processing apparatus) corresponding to a persistent blockchain processing apparatus in a trusted network, and checking, by the copyright processing apparatus or the license processing apparatus, the copyright management transaction, and after the check is successful, sending the copyright management transaction to the corresponding persistent blockchain processing apparatus; after receiving at least one copyright management transaction, constructing, by the persistent blockchain processing apparatus, the at least one copyright management transaction into a block, and sending the constructed block to all blockchain processing apparatuses in the trusted network for performing a block check, where the block includes an identifier of a previous block linked in blockchain data, a time at which the block is generated, and the at least one copyright management transaction; receiving, by the persistent blockchain processing apparatus, block check responses returned by all the blockchain processing apparatuses in the network, determining that the block check is successful, and storing, by the persistent blockchain processing apparatus, the block in the current blockchain; and instructing, by the persistent blockchain processing apparatus, all blockchain processing apparatuses in the network to synchronize the stored block. The copyright management transaction is not tampered, that is, the copyright management transaction in the blockchain is trusted and secure. In this solution, the persistent blockchain apparatus is pre-elected. Therefore, any blockchain processing apparatus that successfully checks a copyright management transaction in the network sends the copyright management transaction to the persistent blockchain processing apparatus.

In a possible design, the storing the copyright management transaction in a blockchain for processing is specifically: sending the copyright management transaction to all blockchain processing apparatuses in a trusted network; electing a blockchain processing apparatus from all blockchain processing apparatuses in the trusted network to be a persistent blockchain processing apparatus, and creating an election transaction; constructing, by the persistent blockchain processing apparatus, at least one copyright management transaction and the election transaction into a block, and storing the block in the current blockchain; and instructing, by the persistent blockchain processing apparatus, all blockchain processing apparatuses in the network to synchronize the stored block. In this solution, the persistent blockchain processing apparatus is elected periodically. Only after the election can the persistent blockchain processing apparatus persistently process the at least one copyright management transaction that is not persistently stored in the network.

According to a third aspect, an embodiment of this application further provides a copyright management system, including at least one blockchain apparatus, where any one blockchain apparatus is configured to receive a copyright processing request, construct a copyright management transaction according to the copyright processing request, and send the copyright management transaction to a persistent blockchain apparatus; and the persistent blockchain apparatus is configured to receive the copyright management transaction sent by the blockchain apparatus, construct the copyright management transaction into a block, store the block in a blockchain for processing, and instruct all blockchain apparatuses in a network to synchronize the stored block, where the blockchain is stored in all the blockchain apparatuses in the network. Because the blockchain apparatus constructs the copyright management transaction according to the copyright processing request, and the persistent blockchain apparatus persistently stores the copyright management transaction in the blockchain, and because the blockchain is stored in all blockchain apparatuses, it is ensured that a copyright processing operation is unchangeable and trusted. Specifically, the storing the block in a blockchain for processing includes: the persistent blockchain apparatus is configured to write the block to the blockchain, and instruct all the blockchain apparatuses in the network to store the constructed block in the blockchains stored by the blockchain apparatuses.

In a possible design, the persistent blockchain apparatus is pre-elected from all the blockchain apparatuses; the persistent blockchain apparatus is specifically configured to send the copyright management transaction to all the blockchain apparatuses in the network before constructing the copyright management transaction into the block, so that all the blockchain apparatuses check the copyright management transaction; and before storing the block in the blockchain for processing, the persistent blockchain apparatus is specifically configured to send the constructed block to all the blockchain apparatuses for performing a block check, where the block includes an identifier of a previous block linked in blockchain data, a time at which the block is generated, and the copyright management transaction; and receive block check responses returned by all the blockchain apparatuses in the network, and determine, according to the received block check responses, that the block check is successful.

In a possible design, the persistent blockchain apparatus is periodically elected from all blockchain apparatuses; the blockchain apparatus is further configured to send the copyright management transaction to all the blockchain apparatuses in the network except the blockchain apparatus itself, receive at least one copyright management transaction sent by any one or a plurality of blockchain apparatuses in a trusted network, and check the copyright management transaction; and the persistent blockchain apparatus is specifically configured to: receive at least one copyright management transaction sent by any one or a plurality of blockchain apparatuses in the trusted network, and check the copyright management transaction; after being elected to be the persistent blockchain apparatus, create an election transaction; and when creating a block, construct the election transaction and the copyright management transaction together into the block.

According to a fourth aspect, an embodiment of the present invention provides a copyright management system, including at least one copyright processing apparatus (or license processing apparatus) and a blockchain processing apparatus, where the copyright processing apparatus corresponds to the blockchain processing apparatus on a one-to-one basis, the copyright processing apparatus (or license processing apparatus) is configured to: receive a copyright processing request, and check the copyright processing request; and after the check is successful, construct a copyright management transaction, and send the copyright management transaction to the corresponding blockchain processing apparatus; and the blockchain processing apparatus is configured to store the copyright management transaction after receiving the copyright management transaction.

According to a fifth aspect, an embodiment of the present invention provides a blockchain apparatus, and the network device has a function of implementing actions of the blockchain apparatus in the foregoing method embodiment. The function may be implemented by hardware, or may be implemented by corresponding software executed by hardware. The hardware or software includes one or more modules corresponding to the foregoing function. In addition, the blockchain apparatus may be a persistent blockchain apparatus. In this case, the network device may further have a function of implementing actions of the persistent blockchain apparatus in the foregoing method embodiment. The function may be implemented by hardware, or may be implemented by corresponding software executed by hardware. The hardware or software includes one or more modules corresponding to the foregoing function.

In a possible design, a structure of the blockchain apparatus includes a processor and a memory, where the memory is configured to store application program code supporting the blockchain apparatus in performing the foregoing method, and the processor is configured to execute the application program stored in the memory. The blockchain apparatus may further include a communications interface, configured to manage communication between a device and another device or a communications network.

According to a sixth aspect, an embodiment of the present invention provides a copyright processing apparatus (or a license processing apparatus), and the network device has a function of implementing actions of the copyright processing apparatus (or the license processing apparatus) in the foregoing method embodiment. The function may be implemented by hardware, or may be implemented by corresponding software executed by hardware. The hardware or software includes one or more modules corresponding to the foregoing function.

In a possible design, a structure of the copyright processing apparatus (or the license processing apparatus) includes a processor and a memory, where the memory is configured to store application program code supporting the copyright processing apparatus (or the license processing apparatus) in performing the foregoing method, and the processor is configured to execute the application program stored in the memory. The copyright processing apparatus (or the license processing apparatus) may further include a communications interface, configured to manage communication between a device and another device or a communications network.

According to a seventh aspect, an embodiment of the present invention provides a blockchain processing apparatus, and the network device has a function of implementing actions of the blockchain processing apparatus in the foregoing method embodiment. The function may be implemented by hardware, or may be implemented by corresponding software executed by hardware. The hardware or software includes one or more modules corresponding to the foregoing function.

In a possible design, a structure of the blockchain processing apparatus includes a processor and a memory, where the memory is configured to store application program code supporting the blockchain processing apparatus in performing the foregoing method, and the processor is configured to execute the application program stored in the memory. The blockchain processing apparatus may further include a communications interface, configured to manage communication between a device and another device or a communications network.

According to an eighth aspect, an embodiment of the present invention provides a computer storage medium, configured to store a computer software instruction used by the foregoing blockchain apparatus, where the computer software instruction includes a program designed for the blockchain apparatus to execute the foregoing aspect.

According to a ninth aspect, an embodiment of the present invention provides a computer storage medium, configured to store a computer software instruction used by the foregoing blockchain processing apparatus, the copyright processing apparatus, or the license processing apparatus, where the computer software instruction includes a program designed for the blockchain processing apparatus, the copyright processing apparatus, or the license processing apparatus to execute the foregoing aspect.

Compared with the prior art, in the solution provided by the present invention, the copyright management transaction in the blockchain can be trusted and cannot be tampered.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may derive other drawings from these accompanying drawings without creative efforts.
FIG. 1 is a schematic diagram of a data structure in a transaction according to an embodiment of the present invention;
FIG. 2 is a schematic diagram of a relationship between a digital content copyright and a license according to an embodiment of the present invention;
FIG. 3 is a schematic diagram of a relationship between a digital content copyright, a product, and a license according to an embodiment of the present invention;
FIG. 4 is a schematic diagram of an application scenario of a copyright management system according to an embodiment of the present invention;
FIG. 5 is a schematic structural diagram of a copyright management system according to an embodiment of the present invention;
FIG. 6 is a schematic diagram of a computer device according to an embodiment of the present invention;
FIG. 7 is a schematic flowchart of persistently storing a block according to an embodiment of the present invention;
FIG. 8 is a schematic flowchart of persistently storing a block according to an embodiment of the present invention;
FIG. 9 is a schematic flowchart of registering a copyright according to an embodiment of the present invention;
FIG. 10 is a schematic flowchart of transferring a copyright according to an embodiment of the present invention;
FIG. 11 is a schematic flowchart of adding a product according to an embodiment of the present invention;
FIG. 12 is a schematic flowchart of abandoning a product according to an embodiment of the present invention;
FIG. 13 is a schematic flowchart of issuing a license according to an embodiment of the present invention;
FIG. 14 is a schematic flowchart of distributing a license according to an embodiment of the present invention;
FIG. 15 is a schematic flowchart of consuming downloaded digital content according to an embodiment of the present invention;
FIG. 16 is a schematic flowchart of consuming streaming media according to an embodiment of the present invention; and
FIG. 17 is a schematic structural diagram of a copyright management system according to an embodiment of the present invention.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

With popularity of a 4G network, distribution of content in a digital form will be a dominant form in the future. The digital content is different from tangible object content, and is easily distributed and spread, and content copyright protection is a critical technical problem. The present invention provides a method, so that any person or organization can register a digital content copyright conveniently, and that tamper resistance of a registration result, existence of time, and uniqueness of content can be proved. Anyone can view a copyright registration result, making copyright management transparent. An owner of a copyright (referred to as the owner hereinafter) can conveniently perform a copyright management process such as copyright transfer, product addition, product abandoning, license issuance, and license distribution. The owner is allowed to participate in copyright management, and the owner can control distribution of the copyright at any time. This protects interests of the owner, and spread and exchange a digital content value on the Internet. In the present invention, a digital content copyright registration transaction, a product transaction, a license transaction, and the like are all recorded in a blockchain. Each device in a P2P network copyright management system stores the blockchain. Once a transaction is added to the blockchain, the transaction cannot be changed. Therefore, tamper resistance of a copyright management process and existence of time are ensured, uniqueness of copyright content is proved, and it is ensured that copyright management is trusted, transparent, and secure.

The following describes knowledge used in the present invention. It should be noted that, for brevity of the specification, same content is generally described only in one place. Therefore, same content in the specification may be mutually cited. Some content is described in different places in this specification, and the descriptions may be made in different dimensions or from different perspectives, but meanings thereof are the same. This is not limited.

An owner of a copyright (owner) is a natural person, a legal person, or a social institution that owns a digital content copyright. The owner of the copyright may be a creator of digital content, or may not be a creator of digital content. Generally, the creator of the digital content is the owner of the copyright, but if the copyright is transferred, a target object to which the copyright is transferred is the owner of the copyright. The owner of the copyright can implement complete control on digital content copyright management, for example, control copyright creation and transfer, control different types of products and licenses for creating the copyright, and send the licenses to different target users, or can control product abandoning according to a commercial requirement of the owner of the copyright.

A content distributor is an organization providing a content service to a consumer, and may distribute digital content to a final consumer. Generally, the content distributor is a commercial institution that operates digital content, for example, a video dissemination institution, a literature works dissemination institution, or a music dissemination institution. In the present invention, the content distributor is also referred to as a distributor sometimes.

The digital content may include literature works, texts, videos, audios, animations, pictures, flashes, and the like. It should be noted that, herein only several common forms of digital content works are illustrated, and are not limited.

The digital content copyright is a right enjoyed by the owner of the copyright for the digital content owned by the owner of the copyright. Generally, the copyright includes a right (for example, a right to use by the owner or a use right granted to another person) to use the digital content and a control right (for example, a right to transfer the copyright). In the present invention, the digital content copyright is referred to as the copyright for short. In a copyright notice in copyright registration, an ownership of the digital content copyright and a declaration of rights may be specified. The copyright notice includes identity information of the owner of the copyright, a digital content identifier, a description about the copyright, identity information of the creator, and an address of the owner of the copyright. The copyright notice may further include a signature of the owner of the copyright. The copyright notice may further include basic information of the digital content, and descriptions about a situation of rights of a work. The identity information of the creator may be a personal introduction of the creator. The basic information of the digital content includes a brief description or evaluation of the digital content. The descriptions about a situation of rights of the digital content include a manner of obtaining the rights, a situation of the owned rights, and descriptions thereof. A copyright management client may perform a hash operation on the digital content according to a hash algorithm to obtain a hash value of raw data content, and then perform hash calculation on the hash value of the content according to a hash algorithm and the address of the current owner of the copyright to obtain the digital content ID. As the owner of the copyright of the data content changes, the digital content ID of the same data content also changes. Regardless of how it changes, the digital content ID is obtained after hash calculation is performed on the hash value of the raw data content and the address of the current owner of the copyright. The address of the owner of the copyright may be generated in advance, or may be generated in a process of performing a copyright management operation. The owner of the copyright may have a plurality of addresses.

A license for using the digital content includes rules of rights of the owner of the copyright to perform content use or distribution operations for a consumer or a content distributor, an address of an authorized object, a decryption key of the digital content, and an authorized digital content identifier. In the present invention, the digital content use license may be referred to as the license for short. Generally, the rules of rights of the owner of the copyright to perform content use or distribution operations for the consumer or the content distributor may also be referred to as permission information. Specifically, the permission information may include operations allowed to be performed by the license, constraints on operations by the license, and license distribution constraints. Generally, the address of the authorized object may also be referred to as a license address. The permission information may include the following content: A. a type of an operation allowed to be performed, for example, play, display, run, print, or export; B. constraints on content operations, for example, a quantity of allowed operations, a time at which an operation is allowed, or a geographic location at which a content operation is allowed; and C. license distribution constraints, which specify whether the license is allowed to be distributed to other persons (consumers or other content distributors), and may include the following distribution constraints: a quantity of distribution times, a start time and an end time of distribution, or distribution duration, or the like. A license issued to a consumer is generally set as indistributable (for example, the quantity of distribution times is set to 0).

A product includes one or more digital content identifiers, a price, and a definition of a license. The owner of the copyright issues different products for different audience and geographic locations according to commercial requirements, to adapt to requirements of consumers and distributors. The license may inherit the definition of the license in the product, that is, a restriction of the license distributed to the consumer is a restriction from the definition of the license in the product.

An asset is an ownership or a use right of the owner of the copyright, the content distributor, and the consumer for the digital content copyright, the license, and the product. Assets are classified into three types: copyright, license, and product.

A blockchain technology is a method for decentralized data storage, transmission, and proving in a distributed structure. A data block (Block) makes the Internet independent of a central server, so that all data changes or transaction items are recorded in a cloud system, and self-proving of data in data transmission is implemented in theory. In this embodiment of the present invention, a blockchain is stored in all blockchain processing apparatuses in a whole network. Specific content of the blockchain in the present invention is further described subsequently.

In the present invention, there are a plurality of copyright management processes, for example, copyright registration and transfer, product creation and abandoning, and license distribution and issuance. Data recording the copyright management processes is referred to as a copyright management transaction. In addition, the blockchain processing apparatus further records data related to a block consensus constraint in the blockchain, where the data is referred to as a block consensus transaction, and the copyright management transaction and the block consensus transaction are referred to as transactions (Transaction) for short. Copyright management transactions may be classified into a copyright transaction, a product transaction, and a license transaction. A transaction includes a version number, a transaction type, input content, and output content. The version number indicates a version of a data structure carrying the transaction. The input content includes an input source of an asset carried in the transaction, and specifically includes: a transaction ID of a copyright management transaction currently carrying an asset, an index of the asset in the copyright management transaction, and a signature of an asset owner. It should be noted that the transaction carrying the asset is a transaction currently carrying the asset. For example, during copyright registration, because the current copyright is not registered, there is no transaction carrying the asset currently, and in this case, the input content is null; during copyright transfer, the transaction carrying the asset is a transaction ID of a transaction carrying the copyright before the copyright is transferred, and certainly, because copyright transfer is not complete yet, there is no transaction ID of the transaction carrying the copyright after the copyright is transferred. The output content includes an address of an output object and asset data. The transaction ID may be a hash value obtained after hash calculation is performed, according to a hash algorithm, on all data included in the transaction. There may be a plurality of hash algorithms, for example, a secure hash algorithm (Secure Hash Algorithm, SHA1 for short) and a message-digest algorithm 5 (Message-Digest Algorithm 5, MD5 for short). It should be noted that, although there are a plurality of hash algorithms, if hash calculation is performed on same data on different network elements, a same hash algorithm should be used. An output index indicates an index of the asset in the transaction carrying the asset. This facilitates asset search in the transaction.

Because the transaction type varies, specific content of a transaction ID of a copyright management transaction currently carrying an asset, an index of the asset in the copyright management transaction, and a private key signature of an asset owner included in input content varies. For the copyright management transaction currently carrying the asset, generally, the asset is valid in the copyright management transaction currently carrying the asset, and the asset is not transferred, abandoned, or consumed. Specifically, A. If the asset carried in the transaction is transferred from another transaction, the transaction ID of the copyright management transaction currently carrying the asset in the input content and the index of the asset in the copyright management transaction are respectively a transaction ID of a copyright management transaction carrying the asset before the asset is transferred and an index of the asset in the copyright management transaction carrying the asset before the asset is transferred. A copyright management transaction may include a plurality of assets, where each asset has an index (index). In this way, an asset in a copyright transaction may be located according to an index. B. If the asset carried in the transaction is derived from a parent asset, the transaction ID of the copyright management transaction currently carrying the asset in the input content and the index of the asset in the copyright management transaction are a transaction ID of a copyright management transaction carrying the parent asset and an index of the parent asset in the copyright management transaction. C. If the asset carried in the transaction has no parent asset, and is added by the asset owner, the transaction ID of the copyright management transaction currently carrying the asset in the input content and the index of the asset in the copyright management transaction are null. 2. A. If the asset carried in the transaction is transferred from another transaction, the private key signature of the asset owner in the input content is a private key signature of the asset owner before the asset is transferred. B. If the asset carried in the transaction is derived from a parent asset, the signature in the input content is a private key signature of an owner of the parent asset. C. If the asset carried in the transaction has no parent asset and is added by the asset owner, the signature in the input content is null.

The output content includes an address of an owner of an asset output and asset data. The owner of the asset output may be specifically an owner of a copyright after the copyright is transferred, an owner of a copyright during copyright registration, a product owner after a product is added, or an owner that owns a license after the license is issued or distributed. The asset data indicates the asset carried in the transaction. According to transaction types, there are different definitions for asset data types, including a copyright asset, a product asset, and a license asset.

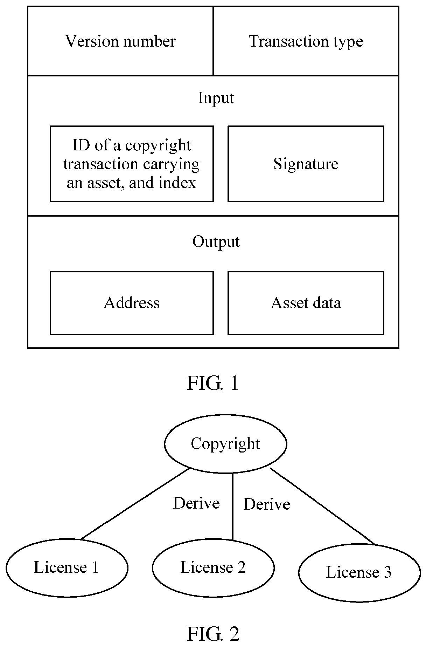

A transaction has data structures in a plurality of forms, for example, a table, a file, and data of a data structure. More specifically, as shown by a data structure in FIG. 1, a transaction in the data structure in FIG. 1 includes a transaction version number, a transaction type, input content (Input), and output content (output).

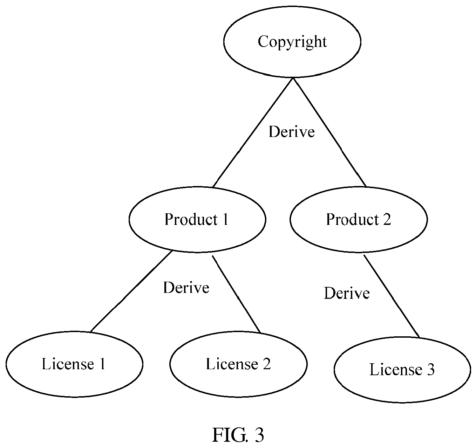

As shown in FIG. 2, generally, a piece of digital content has only one copyright, but based on one copyright, a plurality of licenses may be derived. Herein the copyright is used as a parent asset of a license. In some cases, as shown in FIG. 3, in a digital content copyright ecosystem, there is a concept of a product. In this case, a piece of digital content also has only one copyright, but based on one copyright, a plurality of products may be derived. Herein the copyright may be used as a parent asset of a product. Based on the product, a plurality of licenses may also be derived. Herein the product may be used as a parent asset of a license.

In a copyright management process, four operations may be performed on an asset: (1) Add: The add operation is used to create an asset, and the operation is used to add a root asset (an asset without a parent asset) only, for example, add a copyright asset. (2) Derive: The derive operation is used to create a child asset, and the operation can be used to add a child asset only, for example, derive a product asset or a license asset. (3) Transfer: The transfer operation is used to transfer an asset to an address of a new owner. For example, it is a copyright transfer operation. (4) Abandon: The abandon operation is used by an owner to abandon an asset, where the abandoned asset and its child asset are not valid any longer, for example, abandon a product.

A correspondence between input content and output content of a transaction corresponding to the foregoing four operations is expressed in Table 1.

**Table 1**

| **Operation type** | **Input content** | **Output content** |
|---|---|---|
| Add | Null | Address of an owner after an asset is added and root asset data |
| Derive | Transaction ID of a copyright | Address of an owner of a child |
| | management transaction carrying a parent asset, an index of the parent asset in the copyright management transaction, and a signature of a current asset owner | asset and child asset data |
| Transfer | Transaction ID of a copyright management transaction carrying an original asset, an index of a parent asset in the copyright management transaction, and a signature of a current asset owner | Address of a new owner to which the asset belongs and asset data |
| Abandon | Transaction ID of a copyright management transaction carrying a to-be-abandoned asset, an index of the to-be-abandoned asset in the transaction, and a signature of an owner of the to-be-abandoned asset | Null |

Specifically, for the add operation, the input content in the copyright management transaction corresponding to the operation is set to null, and the output content is the address of the owner after the asset is added and the asset data in the add operation. For the derive operation, the input content in the copyright management transaction corresponding to the operation is set to the transaction ID of the transaction carrying the parent asset, the index of the parent asset in the transaction, and the signature of the owner of the parent asset, and the output content is set to the address of the owner of the child asset and the derived child asset data. Generally, the address of the owner of the child asset may be different from the address of the owner of the parent asset. For the transfer operation, the input content in the copyright management transaction corresponding to the operation is set to the transaction ID of the transaction carrying the original asset, the index of the original asset in the transaction, and the signature of the owner of the original asset, and the output content is set to the address of the asset owner after the asset is transferred and the transferred asset data. For the abandon operation, the input content in the copyright management transaction corresponding to the operation is set to the transaction ID of the transaction carrying the to-be-abandoned asset, the index of the to-be-abandoned asset in the transaction, and the signature of the owner of the to-be-abandoned asset, and the output content is set to null.

In the copyright management method in the present invention, the blockchain technology is applied to copyright management. In this embodiment of the present invention, the blockchain (BlockChain) is a globally open ledger data structure of a copyright transaction, and includes blocks (Block) of several transactions. Each block includes an identifier of a previous block linked in blockchain data, a time at which the block is generated, and a copyright management transaction. It is ensured that content of the block cannot be tampered, and existence of the blockchain data is proved. Because the blockchain data is stored in a P2P network, when any one or more network nodes in the P2P network break down, a loss of the blockchain data is not caused. Therefore, the blockchain data has high security, and it is ensured that the data is stored permanently and cannot be tampered. An identifier of a block may be a hash value obtained after a hash operation is performed, by using a hash algorithm, on content included in the block. Specifically, a block may include a head (head) and a body (body), where the body includes a copyright management transaction (process data of copyright transfer such as transferring a copyright from Bob to Alice), and the head includes critical metadata of the block and generally includes a version number of a block data structure, an identifier of a previous block linked in blockchain data, an identifier of the block, and a timestamp of generating the block. When a block is persistently stored in the blockchain data, the block needs to be added to the blockchain data stored by all blockchain processing apparatuses in the whole network. Blocks are added to the blockchain data one by one according to a persistent storage time sequence, and every block except a first block in the blockchain data needs to be linked to a previous block thereof. In this way, one block is linked to another block in the blockchain data, as in a chain. When a block is persistently stored in the blockchain data, the block cannot be modified. In the blockchain data, the previous block is generally understood as a previous block to which the block is linked.

In addition, the blockchain processing apparatus further records data related to a block consensus constraint in the blockchain data, where the data is referred to as a block consensus transaction. A blockbody (BlockBody) includes a specific copyright management transaction and/or a block consensus transaction. The block consensus transaction includes data that is agreed upon in the whole P2P network for a process of forming a block persistent storage right. The block consensus transaction is also referred to as a basic transaction (rightbase). Specifically, the block consensus transaction includes a transaction type, an address of a node obtaining the persistent storage right, a persistent storage time, a signature affixed to the basic transaction by using a private key of the persistent storage node, and a quantity of nodes. The basic transaction may further include voting content of each node. Further, the voting content may include a voting result, a voting time, a random number, an address of a voting node, and a voting signature. It should be noted that, the blockchain data includes data of each block in the blockchain data, but the blockbody includes only data of the block.

A public key (Public Key) and a private key (Private Key) are a key pair (that is, a public key and a private key) obtained by using an encryption algorithm. For example, the encryption algorithm is an asymmetric encryption algorithm such as Rivest-Shamir-Adleman (Rivest-Shamir-Adleman, RSA for short) or a digital signature algorithm (Digital Signature Algorithm, DSA for short). The public key is a public part in the key pair, and is made public. The private key is a non-public part, and is not made public, and needs to be stored by a user. The public key is generally used to encrypt a session key and verify a digital signature, or encrypt data that may be decrypted by using the corresponding private key. A key pair obtained by using this algorithm can ensure uniqueness globally. When the key pair is used, if one key in the key pair is used to encrypt a data segment, the other key must be used for decryption. For example, if the public key is used to encrypt data, the private key must be used for decryption; or if the private key is used for encryption, the public key must be used for decryption; otherwise, decryption is not successful. In this embodiment of the present invention, generally, lengths of the public key and the private key are 256 bits (bit) or more. The public key may be used to generate an address, used to identify the owner of the copyright, an object receiving the license, or an object owning the product (an object to which the product belongs) in the copyright management process. The private key is a signature proof used by the owner of the copyright for a copyright asset transaction, for example, used to perform authentication and authorization on an identity of the owner of the copyright, the license receiver, or the product receiver.

The address is generated after an operation is performed on the public key. The address corresponds to the public key on a one-to-one basis. The address may be the public key, a hash (hash) value of the public key, a script segment including the public key and an operation instruction, or the like. For example, a form of the address is: Public key + Space + OP_CheckSIG, where OP_CheckSIG indicates a signature verification operation, and the script segment indicates that a copyright registration apparatus 402 verifies the signature in the input content by using the public key and an OP_CheckSIG operation. The address is used to identify an ID of the owner of the copyright, identify an organization or a person receiving the license, or identify an organization or a person receiving the product. Specifically, the address of the owner of the copyright is generated from the public key of the owner of the copyright, and corresponds to the public key of the owner of the copyright on a one-to-one basis, and it is ensured that the address is unique in the whole network. Specifically, the address of the owner of the copyright may be the public key of the owner of the copyright, or may be a hash value of the public key generated after a hash operation is performed on the public key of the owner of the copyright, or may be a plurality of forms such as a script segment including the public key.

The digital content ID is a hash value obtained after a hash operation is performed on the digital content and the address of the owner of the copyright according to a hash algorithm. Generally, a calculation method is: Digital content ID = Hash (Digital content hash value + Address of the owner of the copyright). The digital content hash value is used to identify uniqueness of the digital content, and the digital content ID value is stored in each blockchain processing apparatus and the copyright management client. The digital content hash value may be a hash value obtained after a hash operation is performed on the digital content according to a hash algorithm. Because the copyright may be transferred, the same copyright may be owned by different copyright owners at different times (a copyright can be owned by only one copyright owner in a period of time). Because addresses of different copyright owners are different, the digital content ID changes as the owner of the copyright varies, or a signature of the owner of the copyright may be used to verify whether the owner of the copyright owns the copyright.

The signature is a result of an encryption operation performed on a segment of any digits (for example, the digital content, digital content ID, license, or vote) by using the private key. The public key may be used to verify the signature. If the verification succeeds, it indicates that the signed digital content is published by a public key owner and trusted; otherwise, it indicates that signed digital data is faked and untrusted.

All nodes participating in blockchain data maintenance (in this embodiment of the present invention, a node may also be referred to as a blockchain processing apparatus, and in the present invention, the node is used somewhere, and the blockchain processing apparatus is used elsewhere, but there is no difference between the two terms). A block in the blockchain needs to satisfy a consistency public trust constraint and a proving rule. A node creating a block has a right to create the block, and any node can check, based on the public trust constraint and the proving rule, whether the block satisfies the consensus constraint. Based on the consensus constraint, to verify whether a block is trusted, any person or organization only needs to check whether the block satisfies the consensus constraint, and there is no need to trust an organization. There are many types of consensus constraints, including consensus mechanisms such as proof of work (Proof of Work, PoW for short), proof of stake (Proof of Stake, PoS), and Raft (RAFT) algorithms. For example, constraint content of the PoW includes: the node needs to find a random number (Nonce), where the random number needs to cause a random hash value of the block to have a quantity of first N 0s required by a bitcoin algorithm. The node finds the random number by repeatedly trying, and has a right to create a block after finding the random number. Other nodes check whether the block satisfies the PoW consensus constraint, and if yes, confirm that the block is obtained by the node through honest labor, and therefore trust and accept the block. Therefore, all nodes in the network have consensus on the block. In this case, the block can be generated formally.

A Merkle tree (Merkle, MT for short), also referred to as a hash tree, is a hash binary tree. A leaf node stores a data file, but a non-leaf node stores a hash value obtained after hash values of child nodes of the non-leaf node are concatenated. The hash value of the non-leaf node is referred to as a path hash value, and a hash value of the leaf node is a hash value of real data. Based on the Merkle tree, a digital digest of transaction data of a block is obtained, and the digital digest is stored in a blockhead, to prevent the transaction data from being modified. When bitcoin transaction information is randomly hashed, the transaction information is constructed in a Merkle tree form, so that only a root (root) is included in a random hash value of the block. An advantage of using the Merkle tree is that considerations can be made from perspectives of time and space. Under a distributed circumstance, space may be understood as a corresponding network transmission data amount. From the perspective of time, the Merkle tree uses a tree structure to avoid possible linear time comparison and quickly locate a different key value, where time complexity is 0 (log n). In network transmission, if linear comparison is performed, all hash values in a common key value range must be transmitted every time; however, for the Merkle tree, when search is performed at a layer, a hash value required by the layer is obtained. This reduces a transmission data amount greatly.

In this embodiment of the present invention, a software development kit (SDK) is provided for a digital content consumption developer; and an API interface of a digital copyright blockchain is provided, so that a content consumer terminal application obtains a license through the API, and uses content according to the license. A copyright management APP is provided for a content creator, a distributor, and another supervision and query institution. A copyright management service client provides copyright registration, product creation, and license management service access interfaces.

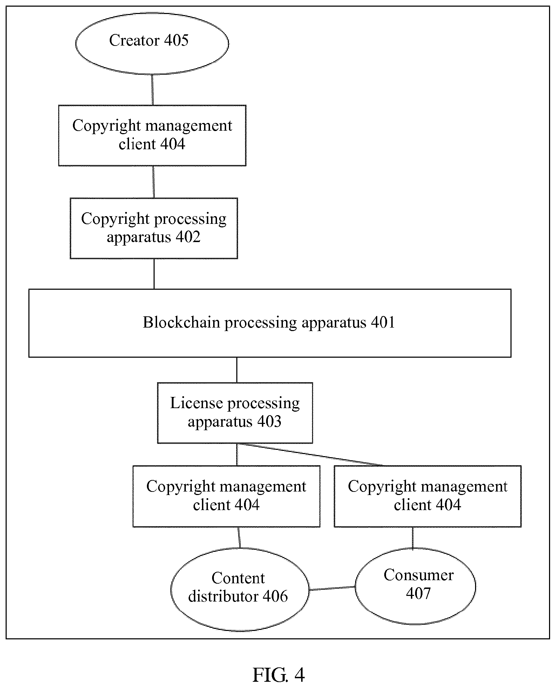

As shown in FIG. 4, a frame diagram of a copyright management system in an embodiment of the present invention includes a blockchain processing apparatus 401, a copyright processing apparatus 402, and a license processing apparatus 403, and the copyright management system may further include a copyright management client 404. Three roles that may be involved in the system include a creator 405, a content distributor 406, and a consumer 407. The copyright processing apparatus 402 and the license processing apparatus 403 are respectively connected to the blockchain processing apparatus 401. The creator 405, the content distributor 406, and the consumer 407 are respectively connected to and log in to the copyright management system by using the copyright management client 404. The copyright management client 404 may be connected to the copyright processing apparatus 402 or the license processing apparatus 403. The following briefly describes main functions of the foregoing apparatuses.

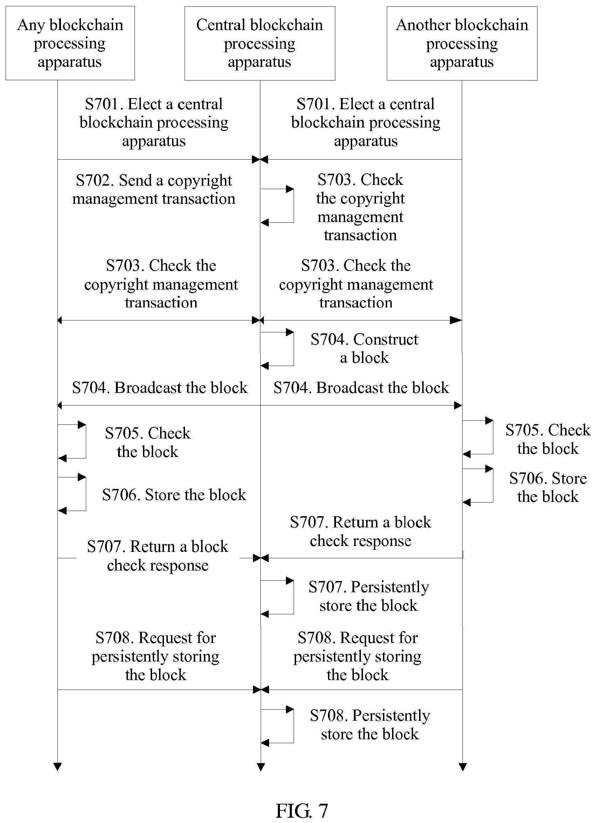

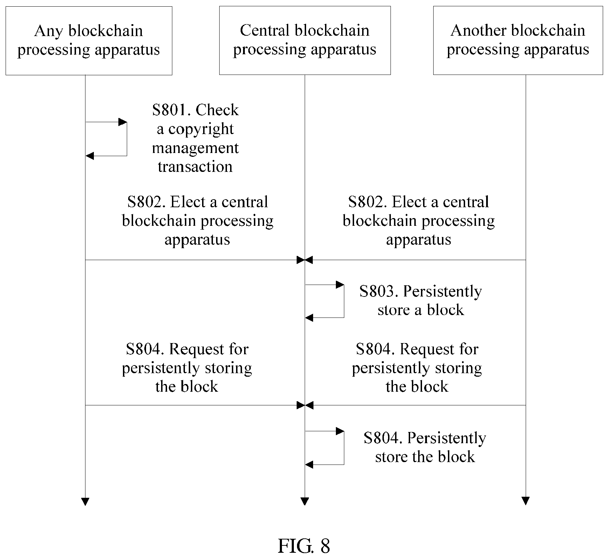

The blockchain processing apparatus 401 may be any trusted node in a peer to peer (Peer to Peer, P2P for short) network, or may be any node in a fully open P2P network. The blockchain processing apparatus 401 may be a general-purpose computing device, and each computing device is referred to as a peer. In a trusted network, the peer needs to be authenticated by the trusted network. In addition, if the copyright processing apparatus 402, the license processing apparatus 403, and the blockchain processing apparatus 401 are integrated in a device, the integrated device is the foregoing peer, and in this case, the apparatus may be referred to as a blockchain apparatus. That is, in this embodiment of the present invention, the blockchain apparatus includes functions of the blockchain processing apparatus 401, the copyright processing apparatus 402, and the license processing apparatus 403. In this case, an interaction process between the blockchain processing apparatus 401 and the copyright processing apparatus 402 or an interaction process between the blockchain processing apparatus 401 and the license processing apparatus 403 in the following processes may be considered as an interaction process between internal modules in the blockchain apparatus. For ease of description, in some embodiments of the present invention, the interaction process between the internal modules in the blockchain apparatus may not be described. In addition, among all blockchain processing apparatuses, at a time, a blockchain processing apparatus persistently stores a block, and is referred to as a persistent blockchain processing apparatus herein, and sometimes may also be referred to as a central blockchain processing apparatus. For different network modes, occasions of generating a persistent blockchain processing apparatus may be different. For example, in the trusted network, the persistent blockchain processing apparatus may be generated in advance, for example, pre-elected, or preset according to a rule. In the trusted network, the persistent blockchain processing apparatus may be elected in a copyright management process. In the fully open network, all blockchain processing apparatuses dig up the persistent blockchain processing apparatus by "mining". For details, refer to the descriptions about the following embodiments in FIG. 7 and FIG. 8.

The blockchain processing apparatus 401 is configured to store a copyright management transaction after receiving the copyright management transaction sent by the copyright processing apparatus 402 or the license processing apparatus 403. For example, the blockchain processing apparatus 401 is configured to broadcast a transaction and a block that are checked successfully, and pack the transaction into a block by using a consensus mechanism, where the block is linked to a global blockchain and broadcast to all peers in the network.

The blockchain processing apparatus 401 is further configured to perform a blockchain integrity check, where the blockchain integrity check includes checking the following content: whether the block points to a previous block, whether a timestamp of generating the block is correct, whether the block satisfies a consensus constraint, whether a Merkle tree of the transaction packed into the block matches data included in the transaction, and the like. The check process is: checking whether a hash value of the previous block included in the new block exists, whether a hash value obtained through calculation by using the Merkle tree for the transaction included in a blockbody matches a hash value included in a blockhead, and whether the block satisfies the consensus constraint. For example, when the consensus constraint is a proof of work mechanism, whether the hash value in the blockhead satisfies a proof of work required by the block, a difference between the timestamp of generating the block and a current time is not greater than a value, and the timestamp must be later than a time of a previous block.

The blockchain processing apparatus 401 is further configured to synchronize blockchain data, and implement consistency of the blockchain data in the P2P network. The peer compares a height of a blockchain stored by the peer with a height of a received latest persistent blockchain, and if finding that the height of the locally stored blockchain is less than the height of the latest blockchain, requests block synchronization from any peer, until the height of the local blockchain is consistent with the height of the latest blockchain.

The blockchain processing apparatus 401 is further configured to locally store the blockchain data. The data may be stored in a plurality of manners, for example, stored in a database, or stored as a file. There are a plurality of logical structures for storage. A logical structure may be a Merkle tree, or may be a Patricia tree. Herein the logical structure may also be referred to as a storage template, for storage based on a format.

The copyright processing apparatus 402 is configured to receive a copyright processing request, for example, for processing copyright registration, copyright transfer, product addition, or product abandoning, check the copyright processing request, and after the copyright processing request is checked successfully, submit a copyright transaction or a product transaction to the blockchain processing apparatus, to implement tamper resistance of an asset record, existence of time, and uniqueness of content. Specifically:
When an owner of a copyright requests the copyright management client 404 to perform copyright registration, the copyright management client 404 generates a pair of a unique public key and a unique private key for the owner of the copyright. A processing of generating the public key and the private key is as follows: The copyright management client 404 first generates a pair of a random public key and a random private key, and sends the public key or an address generated from the public key to the copyright processing apparatus 402; the copyright processing apparatus 402 queries whether the public key or the address in the blockchain processing apparatus 401 is unique; and if the public key or the address already exists in the blockchain processing apparatus 401, the copyright management client 404 is required to regenerate a pair of a random public key and a random private key until the public key and the private key are unique.

In a scenario of copyright registration, the copyright processing apparatus 402 is further configured to determine whether content included in a copyright registration request is complete, and determine, according to a digital content identifier, that a copyright is not registered. In a scenario of copyright transfer, the copyright processing apparatus 402 is further configured to query, in the corresponding blockchain processing apparatus 401 according to a copyright transaction identifier, whether an owner of a copyright owns the to-be-transferred copyright, determine that the copyright is not transferred, and determine, according to a signature of the owner of the copyright, that the owner of the copyright owns the copyright. Certainly, for successful transfer, the copyright processing apparatus 402 further receives an address of a receiver that is sent by the owner of the copyright by using the copyright management client.

The copyright processing apparatus 402 is further configured to receive a copyright management transaction sent by another blockchain processing apparatus 401, and check the copyright management transaction. This specifically includes: checking whether a signature of an owner of a copyright is included, whether the signature of the owner of the copyright is correct, whether input content and output content of the copyright management transaction are complete and accurate, and whether a dependence relationship of the copyright management transaction is correct.

The copyright processing apparatus 402 is further configured to construct a copyright management transaction. A process of constructing the copyright management transaction is setting corresponding values in input content and output content of the copyright management transaction. This is already described in the foregoing description of knowledge about the copyright management transaction. For example, for a copyright registration process, input content of the copyright management transaction is null, and output content is an address of an owner of a copyright. The copyright management transaction is submitted to the blockchain processing apparatus 401. The copyright processing apparatus 402 is further configured to view a processing result returned by the blockchain processing apparatus, and send the processing result to the owner of the copyright by using the copyright management client. The copyright processing apparatus 402 may be an apparatus independent of the blockchain processing apparatus 401. In this case, the copyright processing apparatus 402 corresponds to the blockchain processing apparatus 401 on a one-to-one basis. To be specific, after successful processing, the copyright processing apparatus 402 commits the transaction to the corresponding blockchain processing apparatus 401. Alternatively, the copyright processing apparatus 402 may be integrated in the blockchain processing apparatus 401.

The copyright processing apparatus 402 is further configured to add a product and abandon a product, and check a product transaction. The specific check includes: checking whether a signature of an owner of a copyright is included, whether the signature matches a public key provided in copyright registration, and for a product license issued by a distributor, checking whether the digital signature matches a public key of the granted license; and whether input content and output content of the copyright management transaction are complete and whether a dependence relationship of the transaction is correct.

The license processing apparatus 403 is configured to receive a license issuance request from the copyright management client 404 of an owner, checks a license transaction, and issues a license to the distributor and the consumer after the check is successful, where the license carries a key of digital content, so that the consumer uses the key to decrypt the digital content. Specifically, when the license processing apparatus 403 receives a license distribution request sent by an owner of a copyright by using the copyright management client 404, the license processing apparatus 403 checks whether a signature of a transaction submitter matches an address in product registration, whether an input and an output of the transaction are complete, whether a dependence relationship of the transaction is correct, and whether a product asset of the transaction exists. The license includes information such as a digital content ID, a product transaction hash value, a digital content use time limit, a geographic location limit, a limit of times, or a distribution scope.

For example, the license issuance request includes an identifier of a product transaction carrying a product to which a to-be-issued license belongs, and a signature of a product owner that owns the product; and the checking the copyright processing request may specifically include: determining, according to the identifier of the product transaction carrying the product to which the to-be-issued license belongs, that the product is not abandoned; and determining, according to the signature of the product owner that owns the product, that an owner of the copyright owns the product. By determining whether the product is abandoned and determining the signature, whether the current product is valid and whether the license may be issued can be determined. When the copyright processing request is specifically a license distribution request, the license distribution request includes an identifier of a product transaction carrying a product to which a to-be-issued license belongs, and a signature of an owner of the license before the distribution; and the checking the copyright processing request specifically includes: determining, according to the identifier of the product transaction of the product to which the to-be-issued license belongs, that the product is not abandoned; and determining, according to a signature of a product owner that owns the product, that the owner of the copyright owns the product.

The copyright management client 404 is a client for copyright management, and may be provided in a form of an APP or an SDK. The APP may be complete copyright management software, and directly interact with the copyright processing apparatus or the license processing apparatus or the like. The SDK may be integrated in third-party software, and provide rich functions together with the third-party software. Functions of the copyright management client 404 include a copyright registrar-side management function, a copyright querier-side management function, and a consumer-side control function. The copyright management client 404 may include all the foregoing functions. In other words, a consumer, a creator, and a content distributor can install the same copyright management client 404. Alternatively, the copyright management client 404 may include only one specific function. In other words, for a consumer, the copyright management client 404 may include only the consumer-side control function; and for a creator, the copyright management client 404 may include only the copyright registrar-side management function and the querier-side management function.

Specifically, the copyright registrar-side management function manages the public key and the private key of the owner of the copyright, communicates with the copyright processing apparatus, and obtains and manages all assets registered by the copyright processing apparatus, or the copyright registration management function may further provide an API for creating a copyright management transaction, where necessary parameters are input for interacting with the copyright processing apparatus; and the copyright registration management function provides a license management transaction API, where necessary parameters are input for interacting with the license processing apparatus. The querier-side management function may provide an API for querying copyright information, interact with the copyright processing apparatus, and return a query result to a user. The consumer-side management function may provide an API for obtaining a copyright license. A consumer terminal obtains a license of digital content by using the API, extracts a key from the license, obtains a key by using a public key of the consumer, decrypts the digital content by using the key, indicates terminal consumption (operation such as play or read), and records information such as a quantity of consumption times, time, and context. Once the quantity of consumption times, time, and range do not comply with requirements of the license, use is terminated. The consumer-side management function communicates with the copyright processing apparatus, monitors a latest license transaction on the blockchain processing apparatus, and controls digital content consumption according to the license. If the owner issues a product abandoning transaction, the consumer side resets a control policy of the digital content according to the product abandoning transaction, for example, terminates the previous license.

A process in which an owner of a copyright proves that the owner of the copyright owns a digital content copyright is: first calculating a digital content ID, where the calculation method is: Digital content ID = Hash (Digital content hash value + Address of the owner of the copyright); and querying a copyright transaction from the blockchain processing apparatus 401 according to the digital content ID, where if the copyright transaction is found and an output address of the transaction is equal to the address of the owner of the copyright, and the copyright is not transferred to another destination address, it indicates that the digital content copyright is registered and belongs to the address of the owner of the copyright. The copyright transaction includes identity information (such as an ID card number) of the owner of the copyright, and may be used to prove an identity of the owner of the copyright offline. The owner of the digital content copyright proves the identity by providing a private key signature in copyright registration.

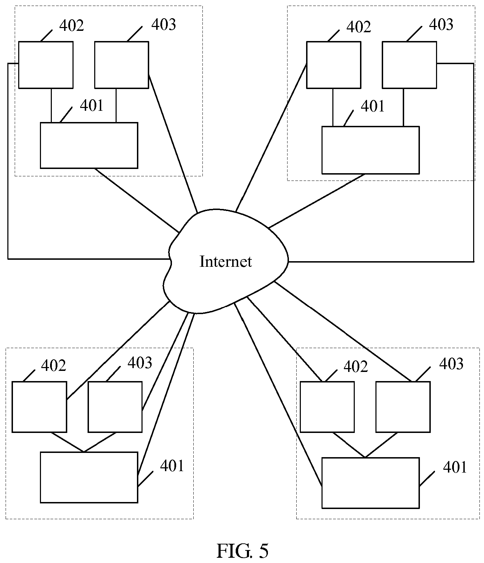

FIG. 5 shows a network architecture with blockchain processing apparatuses provided by the present invention. In a P2P network, blockchain processing apparatuses 401 are interconnected, that is, are all connected to the Internet so that all the blockchain processing apparatuses are interconnected. The foregoing description also shows that the copyright processing apparatus 402 and the license processing apparatus 403 may be respectively independent of the blockchain processing apparatus 401. In this case, the copyright processing apparatus 402 and the license processing apparatus 403 respectively correspond to the blockchain processing apparatus 401 on a one-to-one basis. The copyright processing apparatus 402 and the license processing apparatus 403 may also be a part of the blockchain processing apparatus 401.

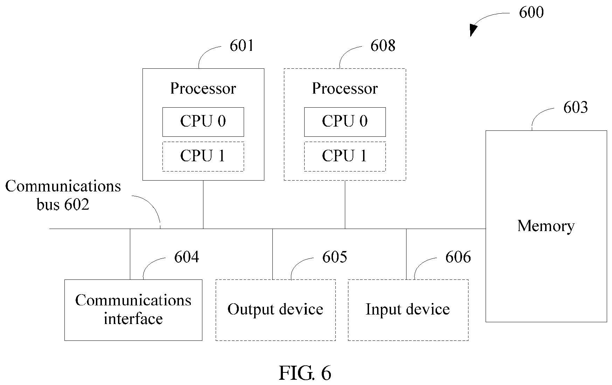

As shown in FIG. 6, the blockchain processing apparatus, the copyright processing apparatus, or the license processing apparatus in FIG. 4 or FIG. 5 may be implemented by a computer device (or system) in FIG. 6. In addition, the blockchain apparatus may be implemented by a computer device (or system) in FIG. 6.

FIG. 6 is a schematic diagram of a computer device according to an embodiment of the present invention. The computer device 600 includes at least one processor 601, a communications bus 602, a memory 603, and at least one communications interface 604.

The processor 601 may be a general-purpose central processing unit (CPU), a microprocessor, an application-specific integrated circuit (application-specific integrated circuit, ASIC), or one or more integrated circuits for controlling program execution in the solution of the present invention. The communications bus 602 may include a path transmitting information between the foregoing components. The communications interface 604 is a type of apparatus using any transceiver, and is configured to communicate with another device or a communications network, for example, an Ethernet, a radio access network (RAN), or a wireless local area network (Wireless Local Area Network, WLAN).

The memory 603 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM), of another optical disc storage, an optical disc storage (including a compact disc, a laser disc, an optical disc, a digital versatile disc, a Blu-ray disc, or the like), a magnetic disk storage medium, or another magnetic storage device, or any other medium that can be used to carry or store expected program code having an instruction or a data structure form and can be accessed by a computer. This is not limited. The memory may exist independently, and is connected to the processor by the bus. The memory may also be integrated with the processor.

The memory 603 is configured to store application program code used to execute the solution of the present invention, where the application code is executed by the processor 601. The processor 601 is configured to execute the application program code stored in the memory 603.

In a specific implementation, in an embodiment, the processor 601 may include one or more CPUs, for example, a CPU 0 and a CPU 1 in FIG. 6.

In a specific implementation, in an embodiment, the computer device 600 may include a plurality of processors, for example, the processor 601 and a processor 608 in FIG. 6. Each of the processors may be a single-core (single-CPU) processor, or may be a multi-core (multi-CPU) processor. The processor herein may be one or more devices, circuits, and/or processing cores used for processing data (for example, a computer program instruction).

In a specific implementation, in an embodiment, the computer device 600 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, or a projector (projector). The input device 606 communicates with the processor 601, and may receive an input of a user in a plurality of manners. For example, the input device 606 may be a mouse, a keyboard, a touchscreen device, or a sensing device.

The computer device 600 may be a general-purpose computer device or a dedicated computer device. In a specific implementation, the computer device 600 may be a desktop computer, a portable computer, a network server, a palmtop computer (Personal Digital Assistant, PDA), a mobile phone, a tablet computer, a wireless terminal device, a communications device, an embedded device, or a device having a similar structure in FIG. 6. In this embodiment of the present invention, the type of the computer device 600 is not limited.

The copyright processing apparatus, the license processing apparatus, or the blockchain processing apparatus in FIG. 4 or FIG. 5 may be the device shown in FIG. 6. The memory in the copyright processing apparatus 402, the license processing apparatus 403, or the blockchain processing apparatus 401 stores one or more software modules. In addition, the blockchain apparatus may be the device shown in FIG. 5, and the memory in the blockchain apparatus stores one or more software modules. The following describes two network modes. One is a trusted network, in which the blockchain processing apparatus 401, the copyright processing apparatus 402, and the license processing apparatus 403 all need to be authenticated in the trusted network, and can join the trusted network only after successful authentication, and the trusted network is equivalent to a half-open network. One is an open network, in which the blockchain processing apparatus 401, the copyright processing apparatus 402, and the license processing apparatus 403 may be any computing device on the Internet, and this network is a fully open network. Regardless of the network type, the network architecture may be shown in FIG. 5. Therefore, the following may use the network architecture in FIG. 5 for description when describing the two types of networks.

### I. Trusted network

A blockchain processing apparatus in the trusted network may also be referred to as a consortium blockchain (Consortium blockchain or permissioned blockchain) processing apparatus. Such blockchain processing apparatuses have the following features: (1) The blockchain processing apparatuses are physically scattered evenly, and are distributed in data centers of institutions or organizations of different interest groups. Such blockchain processing apparatuses may be nodes of a copyright service provider, nodes of a content distributor, or nodes of a supervision institution. (2) Nodes are trusted: All nodes jointly form a tamper-resistant closed network that has public trust and whose nodes are authenticated. (3) Not exposed to public: An unauthorized machine cannot access the nodes in the trusted network freely, and needs to access the nodes through a gateway. A node may be changed by using a trusted management application. (4) A node needs to be authenticated, and obtain a public key and a private key allocated by the copyright operator, where the public key and the private key are used for node authentication, voting and election, and identity-based signature for persistent storage of a block.

In the network architecture, the blockchain processing apparatus stores the following types of information: a submitted copyright transaction (authorization information or registration information described above), transaction submission time information, address of a processing node, a signature affixed to the address of the processing node by using the private key, an address of a persistent storage node, and a signature affixed to the address of the persistent storage node by using the private key.

In the network architecture, to add a copyright management transaction to a block, and persistently store (or write) the block in blockchain data, a plurality of manners may be used for implementation. The following describes the process of persistently storing the block by using two manners as an example: a real-time persistent storage manner and a non-real-time persistent storage manner.

In the real-time persistent storage manner, the scenario is: in a network with trusted blockchain processing apparatuses, before a block is persistently stored, a blockchain processing apparatus is elected to be a leader (leader) by using an election algorithm. By using this method, a record may be persistently stored in real time. As shown in FIG. 7, the figure shows only a process performed by a blockchain processing apparatus. For ease of description of the figure, a copyright processing apparatus or a license processing apparatus corresponding to the blockchain processing apparatus is not shown in the figure. It may be understood that some processes in the figure, for example, S703 and S705, should be performed by the copyright processing apparatus or the license processing apparatus. The process includes the following steps.

S701. By using an election algorithm, pre-elect a trusted blockchain processing apparatus from all trusted blockchain processing apparatuses in a network to act as a leader. Alternatively, a blockchain processing apparatus in which a leader is located may be referred to as a persistent blockchain processing apparatus. Subsequently, the leader persistently stores a copyright management transaction in a blockchain and synchronizes the transaction to blockchain data in the whole network. There are a plurality of election algorithms, for example, a Raft algorithm and a polling algorithm. The algorithms are described separately below.

S702. When any blockchain processing apparatus in the network receives a checked copyright management transaction that is submitted by a copyright processing apparatus corresponding to the blockchain processing apparatus, the blockchain processing apparatus correspondingly sends the copyright management transaction to a copyright processing apparatus corresponding to the leader. In this embodiment of the present invention, the blockchain processing apparatus is referred to as a receiving blockchain processing apparatus. Copyright management transactions may be classified into different types. For a copyright transaction and a product transaction, a transaction submitted by the copyright processing apparatus is received. A license transaction is a transaction received from a license processing apparatus. In this embodiment, the copyright processing apparatus may be replaced with a license processing apparatus.

S703. The copyright processing apparatus corresponding to the leader receives the copyright management transaction submitted by the receiving blockchain processing apparatus, and checks the copyright management transaction, where the check process is the same as the transaction check process described above. For different types of copyright management transactions, check processes are different. Details are further described below. If the check succeeds, the transaction is sent to the blockchain processing apparatus corresponding to the leader; or if the check fails, a transaction failure response is returned to the receiving blockchain processing apparatus.

To ensure post-retroactivity, a copyright management transaction submitted by each node needs to include a node address and a signature affixed by using a node private key, so that other peers know from which node the request enters, and that a node transferring error data is punished, for example, forbidden to participate in a leader election.

S704. The blockchain processing apparatus corresponding to the leader receives one or more copyright management transactions sent by the copyright processing apparatus corresponding to the leader; and the leader constructs a block by using the copyright management transaction, and constructs a blockhead and a blockbody separately, where an identifier pointing to a previous block in the blockchain is added to the blockhead, and an identifier of the block may be a hash value of the block, a hash value of a Merkle tree of the copyright management transaction and a time at which the block is created. The leader constructs a base transaction, including an address of a creator, a quantity of transactions, a size in bytes, and a signature affixed to the base transaction by using a private key of the creator. The base transaction and all received transactions added after the base transaction are used as the blockbody of the whole block. If the block is a first block after the election, the base transaction includes election decision information (an election time, a total quantity of nodes, vote information of each node, and an election result). The block is broadcast to all copyright processing apparatuses or license processing apparatuses in the trusted network, and the block is stored.

S705. Each copyright processing apparatus in the trusted network receives the broadcast block, checks the block, and if the check succeeds, sends the block to the blockchain processing apparatus corresponding to the copyright processing apparatus, or if the check fails, returns a transaction failure response to the blockchain processing apparatus corresponding to the leader, and records the failure event as a penalty basis for the leader in a next election (for example, a dissenting vote to the leader).

The block check process includes: checking whether the block includes the identifier pointing to the previous block, whether the Merkle value of the block is correct, whether a first transaction of the block is a base transaction, and whether the creator of the block satisfies a legal election decision.

S706. Each blockchain processing apparatus receives the block sent by the copyright processing apparatus corresponding to the blockchain processing apparatus, and stores the block.

S707. The blockchain processing apparatus in which the leader is located receives a block success response or failure response returned by each blockchain processing apparatus, and counts a quantity of success responses; and if the quantity of success responses exceeds a specified threshold, it indicates that the check succeeds, and in this case, the block is submitted to each blockchain processing apparatus in the network, so that each blockchain processing apparatus persistently stores the block and generates a transaction ID for each transaction in the block; or if a quantity of check successes does not exceed a threshold, the submission is canceled. The threshold may be set according to a requirement. For example, the threshold is 50%.

S708. Each blockchain processing apparatus receives an instruction for submitting the block, persistently stores the block, and returns a persistent storage success response to the blockchain processing apparatus in which the leader is located. The blockchain processing apparatus in which the leader is located receives the persistent storage responses returned by all the blockchain processing apparatuses, and returns a record addition success response to all blockchain processing apparatuses.

The following describes the leader election process according to the Raft algorithm in step S701.

The process includes the following steps.
1. After a node considers that a leader is offline, the node first checks whether the node is in an election state; and if the node is in the election state, at a time that is twice a failover timeout interval, the node does not become a leader, that is, the node is a follower.
2. If the node has not voted, the node may become a candidate.
   To become a candidate, a node needs to perform the following process:
   (1) Update a failover state to start.
   (2) Add 1 to a current epoch, and this is equivalent to entering a new term, where the epoch in the node is a term in the Raft protocol.
   (3) Update a timeout interval of the node to a current time plus a random time, where the random time is a random quantity of milliseconds in one second.
   (4) Send an is-leader-down-by-addr command to other nodes to request voting. The command carries the epoch of the node.
   (5) Cast a vote to the node itself, where a voting manner is changing a leader and a leader_epoch in a leader structure of the node to the voted node and an epoch thereof.
3. Other nodes receive the is-leader-down-by-addr command of the candidate. If a current epoch of a node is the same as the epoch transmitted by the candidate to the node, it indicates that the node has changed the leader and the leader_epoch in the leader structure of the node to another candidate, and this is equivalent to casting a vote to another candidate. After casting the vote to another node, in the current epoch, the node can only become a follower. A voting message needs to include information (an epoch, a voting target, a voting node, a random number, a time, and a signature of the voting node), and the voter stores one copy of the information for ease of subsequent verification.
4. The candidate counts its quantity of votes continuously, until the candidate finds that a quantity of votes agreeing to take the candidate as a leader exceeds a half and exceeds a set of nodes configured by the candidate.
5. During the election, if the candidate does not obtain a quantity of votes that exceeds a half and exceeds the set of nodes configured by the candidate, the candidate fails to be elected.
6. If no candidate obtains more votes in an epoch, after waiting for a time that is longer than twice the failover timeout interval, the candidate adds an epoch to vote again.
7. If a quantity of votes obtained by a candidate exceeds a half and exceeds a set of nodes configured by the candidate, the candidate becomes a leader. A voting message needs to include information (an epoch, a voting target, a voting node, a random number, a time, and a signature of the voting node), and the voter stores one copy of the information for ease of subsequent verification.

The candidate sends a notification of being a leader to other nodes, where the notification message includes content of a base transaction. Other nodes verify the base transaction, and if the verification fails, a new round of the election is initiated.

In the periodic block persistent storage manner, the scenario is: in a network with trusted blockchain processing apparatuses, no fixed leader exists among the trusted blockchain processing apparatuses, and persistent storage is implemented periodically.

As shown in FIG. 8, a periodic block persistent storage process is as follows:
S801. When any trusted blockchain processing apparatus in a network receives a copyright management transaction, the blockchain processing apparatus checks the copyright management transaction, and if the check succeeds, broadcasts the copyright management transaction to all other trusted blockchain processing apparatuses in the network, and caches the copyright management transaction. If the check fails, the blockchain processing apparatus returns a check failure response to a sender.
S802. Elect a node in a P2P network to be a leader. An election algorithm may be PoW, PoS, Raft, polling, an integrated algorithm, or the like.

The following describes the election process by using two election algorithms as an example. The polling algorithm specifically includes:
Polling is performed according to a sequence number, for example, according to a sequence of sizes of identifiers or sizes of public keys of nodes. When a message exists in a cache pool, polling is performed every N seconds (at most M records each time, where M is configurable), or is performed after persistent storage is complete each time.

For example, a node 1 starts first, and a node 2 knows that the node 2 is after the node 1, and starts after receiving a persistent storage complete message from the node 1. If the node 2 fails, a node 3 determines that the node 2 does not perform persistent storage in a period of N seconds. In this case, the node 3 ignores the node 2 in a delay interval, and initiates persistent storage.

The integrated algorithm specifically includes:
During voting, each node needs to sign voting content (who is voted and a random number) by using a private key, and locally stores the vote. For an election process, refer to the foregoing Raft algorithm.

Once a quantity of votes obtained by a node exceeds a half, the node is elected to be a leader, records all votes in a first transaction of a first block in a term of the local leader, and affixes a signature by using a private key of the leader. In this method, all nodes may distinguish whether the leader is elected legally, and a dishonest node cannot forge an election process to make itself a leader and attack the system.

The leader adds a cached to-be-persistently-stored transaction to the block, persistently stores the block in the whole network, and generates a transaction ID for each transaction in the block.

For the leader elected by using the election method, a vote needs to be used as a first record of the block, and content of the record needs to be persistently stored. The content of the record includes voting process data, a voting result, and a signature affixed by using the private key of the leader. All nodes may verify the block. If a faked vote is detected, the block is not accepted, and consequently, the node is untrusted. Each node records a dishonest node locally, and does not cast a vote to the node during a next election.

To ensure post-retroactivity, each node has a public key and a private key, and signs, by using the private key, information such as a node identifier or a receiving time added to a log, to know from which node a persistent storage request is initiated.

S803. After being elected successfully, the node elected to be the leader starts a persistent storage process according to a persistent storage period of a block: 1. creating an election transaction, including information such as election process information, an election result, a time, and a signature of an electee; 2. constructing a blockhead, including: packing a Merkle tree of a copyright management transaction received in a current period, recording the Merkle tree in the blockhead, and constructing a chain pointing to a previous block in the blockhead, and the like; 3. constructing a blockbody, and placing an election decision as a base transaction in the first transaction; and 4. broadcasting the block to all nodes when packing is complete.

S804. Each blockchain processing apparatus receives a persistent storage record, and checks and persistently stores the record separately.

The following describes a process of persistent storage in a second network mode.

### II. Fully open network

In this network, all peers may be any node in the fully open network. In the network architecture, the persistent storage process specifically includes: running a management terminal application of a public blockchain, accessing a public blockchain network, performing registration, and obtaining an address identifier used to load copyright management service code; developing application logic, and using a development environment provided by the public blockchain network to develop and compile copyright management service code; deploying the application logic, and creating service logic in the blockchain; and starting a copyright management application in the public blockchain. When any public blockchain node in the network receives a copyright management transaction, a copyright processing apparatus in the public blockchain checks the copyright management transaction, and if the check succeeds, broadcasts the information record to the network by using a broadcast function of the public blockchain, or if the check fails, returns a check failure response to a sender. A node in the public blockchain is found according to an algorithm such as PoW or PoS, and a persistent storage process started: 1. creating a transaction, including information about a miner of the block, revenue information of the miner, and algorithm related information (for example, for the PoW algorithm, a random number needs to be recorded, and for the PoS algorithm, interest related information needs to be recorded), where whether the information is recorded in a first transaction or a blockhead is not limited; 2. constructing a blockhead (including packing a Merkle tree of a transaction received in a current period, recording the Merkle tree in the blockhead, constructing a chain pointing to a previous block in the blockhead, and the like); and 3. packing the transaction together with the blockhead, and broadcasting the block to all nodes when packing is complete. Other nodes in the public blockchain receive the persistently stored block, and check and persistently store the block separately.

In this embodiment of the present invention, a digital copyright registration and authorization record is recorded by using a blockchain technology, and tamper resistance of a copyright management transaction and a time proof are implemented by using a digital encryption technology and a decentralized consensus technology, without trusting any third party. In addition, an election process is recorded in the blockchain by using a blockchain construction technology and using digital cryptography. Any node can simply check validity of a block, thereby reaching consensus on the block in the decentralized network, so that processing of blockchain data is transparent and open, and cannot be forged.

By using the blockchain technology, a copyright asset owner controls a content distribution process. Even if content has been distributed to the network, the copyright asset owner can control the content distribution process. The following further describes an embodiment of the present invention in detail based on the foregoing common aspect of the present invention.

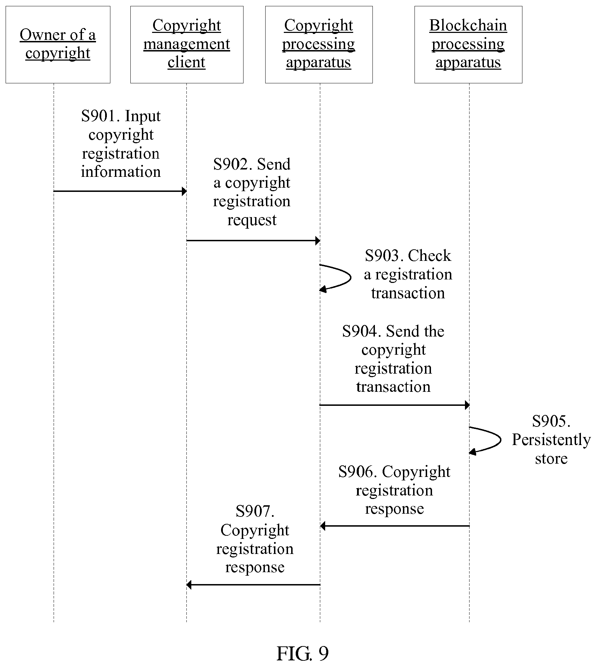

As shown in FIG. 9, an embodiment of the present invention provides a copyright registration process. The process includes the following steps.

S901. A copyright management client receives copyright registration information input by an owner of a copyright, where the copyright registration information includes original digital content and a copyright notice. Herein there may be one or more works. Rights that are obtained may be original rights, inherited rights, or transferred rights, and the owned rights may include a publication right, a distribution right, a renting right, a modification right, and the like.

S902. The copyright management client sends a copyright registration request to any copyright processing apparatus in a network, where the copyright registration request includes the copyright notice.

The copyright registration request may be a general message. In this case, the copyright registration request further includes a type of the general message, and the type of the general message is a copyright registration message.

S903. The copyright processing apparatus receives the copyright registration request, and checks the copyright registration request, where the check process includes a copyright notice integrity check and a copyright registration repeatability check.

The copyright notice integrity check includes checking whether information included in the copyright registration request sent by the copyright management client is complete.

The copyright registration repeatability check process includes: the copyright processing apparatus queries a blockchain processing apparatus corresponding to the copyright processing apparatus for copyright registration information by using a digital content ID; and if a query result is not null, it indicates that the copyright of digital content submitted by a creator is already registered by someone, and returns a copyright registration failure response to the copyright management client; or if a query result is null, it indicates that the copyright of the digital content is not registered, and step S904 continues to be performed.

S904. The copyright processing apparatus constructs a copyright transaction according to the copyright registration request, and sends the constructed copyright transaction to a corresponding blockchain processing apparatus.

The copyright transaction may include a version number of the transaction, a transaction type, and input (input) content and output (output) content, where the version number indicates version information of the transaction. Herein the transaction type is a copyright transaction. The input content includes a source of a copyright input carried in the transaction. Because the copyright transaction is copyright transfer, and there is no copyright input source, a transaction ID of a copyright management transaction currently carrying an asset, an index of the asset in the transaction, and a private key signature of a current owner of the asset in the input content are all null. The output content is an address of the owner of the copyright, and the asset is a copyright asset.

S905. The copyright processing apparatus sends the copyright transaction to the blockchain processing apparatus corresponding to the copyright processing apparatus, so that a process of persistently storing a block is performed. The process of persistently storing the block is the same as the processes in FIG. 6 and FIG. 7, and is not further described herein.

S906. The blockchain processing apparatus returns a copyright registration response to the copyright processing apparatus, where the response message includes a registration result, and a copyright transaction ID and an output index that are generated during persistent storage.

S907. If the result in the copyright registration response is success, the copyright processing apparatus returns the copyright registration response to the copyright management client.

By performing the foregoing process, a process of online registration of the copyright on the Internet is implemented; and by persistently storing the copyright registration information in a blockchain, tamper resistance of the copyright registration result, a time proof, and trust are ensured. In addition, the owner of the copyright can control copyright registration.

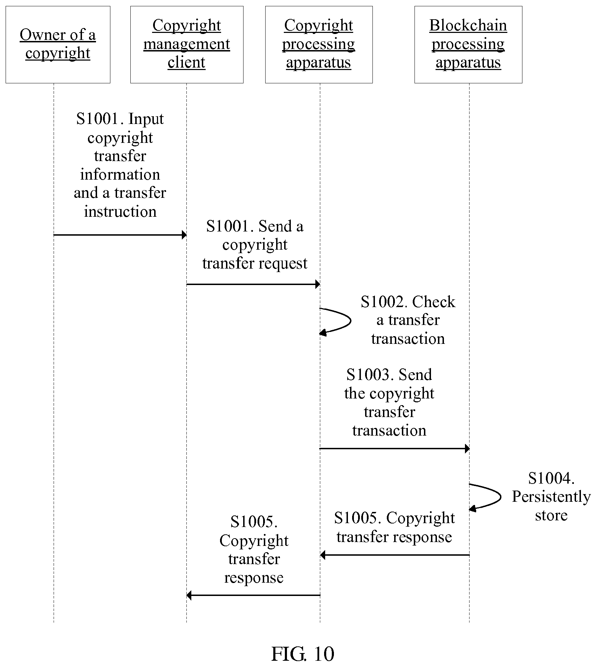

The following describes a process of copyright transfer. A typical application scenario of the process is as follows: An owner of a copyright transfers the copyright registered with a blockchain processing apparatus to a destination of the copyright transfer, also referred to as a third party sometimes, where the third party may be a natural person, an enterprise legal person, another institution, or the like. After the transfer is successful, a creator does not own the copyright any longer, and cannot control copyright permissions; the third party owns the copyright, and obtains control over the copyright permissions. The owner of the copyright may be the creator, a natural person, or an institution of a legal person. For ease of description, it is assumed that the creator is the owner of the copyright in the following description. Certainly, the scenario is also applicable to FIG. 10, and the process of the method includes the following steps.

S1001. A copyright management client of an owner of a copyright receives copyright transfer information and a transfer instruction that are input by the owner of the copyright, where the copyright transfer information includes an address of a copyright transfer destination. The copyright management client of the owner of the copyright generates a copyright transfer request, and sends the copyright transfer request to any copyright processing apparatus in a network. The copyright transfer request includes a transaction ID of a copyright transaction carrying a to-be-transferred copyright, an index of the to-be-transferred copyright in the copyright transaction, and a signature of the owner of the copyright, that is, a signature affixed by the owner of the copyright to the copyright transfer request by using a private key. Further, the copyright transfer request further includes the address of the copyright transfer destination, identity information of a creator, identity information of the copyright transfer destination, basic information of digital content, descriptions about a situation of rights of a work, a hash value of raw data content, and a digital content ID. Herein the digital content ID is a digital content ID after the copyright transfer, and is recalculated according to the address of the copyright transfer destination. The calculation process is: performing a hash operation on a hash value of raw digital content before the transfer and the address of the copyright transfer destination by using a hash algorithm, to obtain the digital content ID after the copyright transfer.

Before the copyright transfer process starts, a copyright management client of the copyright transfer destination generates a pair of a random public key and a random private key for the copyright transfer destination, and stores the generated public key and private key on the copyright management client locally, where the private key may be stored secretly.

Further, the copyright management client of the copyright transfer destination obtains an address through calculation according to an algorithm and the obtained public key. The copyright management client of the copyright transfer destination sends the generated address of a third party to the creator in a plurality of forms such as online or offline.

Certainly, the copyright management client of the copyright transfer destination may also use a locally stored pair of a public key and a private key of the copyright transfer destination, and the copyright management client of the copyright transfer destination does not need to generate a pair of a random public key and a random private key for the copyright transfer destination.

S1002. The copyright processing apparatus receives the copyright transfer request, and checks the copyright transfer request. The check method is as follows:
(1) The copyright processing apparatus queries a blockchain processing apparatus corresponding to the copyright processing apparatus for whether the transaction ID of the copyright transaction currently carrying the to-be-transferred copyright and the index of the to-be-transferred copyright in the copyright transaction exist. For the query method, refer to the registration process. If the transaction ID and the index do not exist, the check fails.
(2) The copyright processing apparatus queries the blockchain processing apparatus for output content of the copyright transaction according to the transaction ID of the copyright transaction currently carrying the to-be-transferred copyright and the index of the to-be-transferred copyright in the copyright transaction, and performs signature verification on a private key signature of the owner of the copyright by using an address included in the output content. A specific query method is as follows: Each blockchain processing apparatus stores a transaction ID of each copyright transaction, input content, output content, and a correspondence between them. The output content of the transaction can be found according to the transaction ID and the index of the to-be-transferred copyright in the copyright transaction. Because the output content includes the address of the owner of the to-be-transferred copyright, the address of the owner of the copyright can be used to perform signature verification on the private key signature of the owner of the copyright. For details about a signature verification method, refer to a signature verification method of an asymmetric algorithm such as RSA or DSA. The RSA signature verification method is: decrypting the signature by using a public key, and comparing a decryption result with signed content. If they are consistent, it indicates that the signature verification succeeds. If the verification fails, the check fails.
(3) The copyright processing apparatus checks whether the hash value of the raw digital content carried in the copyright transfer request is correct. The check method is: querying the corresponding blockchain processing apparatus for whether the digital content ID recorded in the copyright transaction is equal to a hash value obtained after a hash operation is performed on the hash value of the raw digital content and the address of the owner of the copyright to which the copyright belongs before the transfer. If they are different, the check fails. A purpose of the check is to prevent an untrusted node from tampering with the hash value of the raw digital content.
(3) The copyright processing apparatus checks whether the digital content ID of the copyright transfer request is correct. The check method is: checking whether the digital content ID of the copyright transfer request is equal to a hash value obtained after a hash operation is performed on the hash value of the raw digital content and the address of the copyright transfer destination. If they are different, the check fails. A purpose of the check is to prevent an untrusted node from tampering with the digital content ID.
(3) and (4) are optional. In some cases, in a registration process, some dishonest copyright processing apparatuses obtain a copyright signature, but cannot obtain the copyright content ID and the hash value of the raw digital content. After (3) and (4) are performed, the dishonest copyright processing apparatuses can be detected. (5) If the check fails, a copyright transaction failure response is returned to the digital management apparatus.

If the check succeeds, a copyright transaction is constructed, a transaction ID of the copyright management transaction currently carrying an asset and a signature of an asset owner in input content included in the copyright management transaction are respectively set to the transaction ID of the transaction carrying the copyright before the copyright is transferred and the signature of the owner of the copyright before the copyright is transferred, and output content is set to the address of the owner of the copyright after the copyright is transferred.

S1003. The copyright processing apparatus sends the copyright transaction to a blockchain processing apparatus corresponding to the copyright processing apparatus, so that a process of persistently storing a block is implemented. The process of persistently storing the block is the same as the processes in FIG. 6 and FIG. 7, and is not further described herein.

S1004. The blockchain processing apparatus returns a copyright transfer response to the copyright processing apparatus.

S1005. The copyright processing apparatus returns the copyright transfer response to the copyright management client of the owner of the copyright.

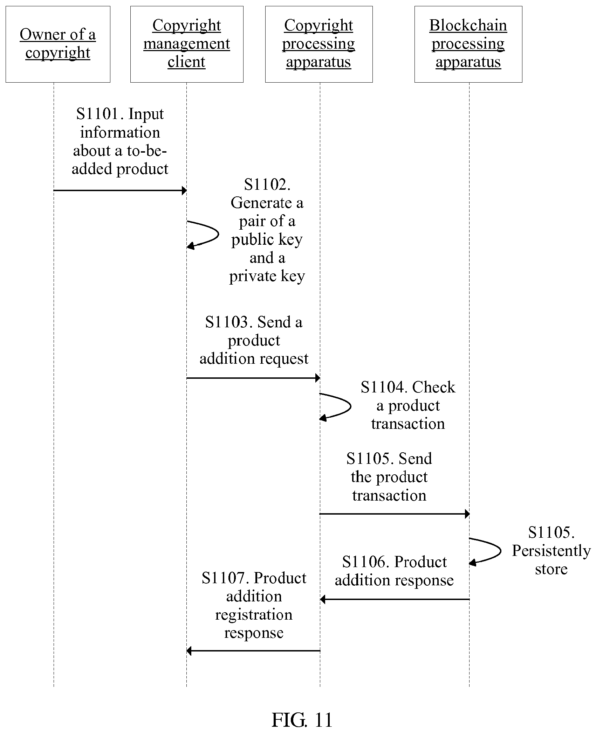

By performing the foregoing process, a process of online transfer of the copyright on the Internet is implemented; and by persistently storing the copyright management transaction of copyright transfer in a blockchain, tamper resistance of a copyright transfer result, uniqueness of a time proof, and trust are ensured. In addition, the owner of the copyright can control copyright transfer. The following describes a process of adding a product. As shown in FIG. 11, the process includes the following steps.

S 1101. A copyright management client receives a command for adding a product and information about the to-be-added product that are input by an owner of a copyright. The information about the to-be-added product includes at least one copyright of the specified to-be-added product, a product name, description information, a price, and a content use rule.

S1102. The copyright management client generates a pair of a random public key and a random private key of an asymmetric encryption algorithm for the added product, where the keys may be referred to as a product public key and a product private key. The copyright management client may secretly store the private key, used to verify an identity of the owner of the copyright in a network.

S1103. The copyright management client generates a product addition request, and sends the product addition request to a copyright processing apparatus. The product addition request includes the following fields: a request type, an address of an asset owner, a product name, description information, price information, a license, a copyright transaction ID, an output index, a private key signature in copyright registration, and a hash value of digital content obtained from a copyright transaction. The request type is a new product, the address of the asset owner is generated from the product public key, and the address corresponds to the product public key on a one-to-one basis. The address may be the product public key directly, or may be a hash value of the product public key. For example, the product name and the description information may include information such as a high definition version of Transformers 4, price: 10 yuan, and indistributable.

S1104. The copyright processing apparatus receives the product addition request, and checks the product addition request; if the check succeeds, the copyright processing apparatus constructs a product transaction according to the product addition request, sets a transaction ID of the transaction currently carrying an asset and a signature of an asset owner in input content included in the product transaction respectively to a transaction ID of a copyright transaction currently carrying a copyright and a signature of the owner of the copyright, and sets output content to an address of an owner of the added product; and the copyright processing apparatus sends the product transaction to a blockchain processing apparatus corresponding to the copyright processing apparatus. The check method is as follows:
(1) The copyright processing apparatus queries the blockchain processing apparatus corresponding to the copyright processing apparatus for whether the transaction ID of the copyright transaction currently carrying the copyright and an index of the copyright in the copyright transaction exist. For the query method, refer to the registration process. If the transaction ID and the index do not exist, the check fails.
(2) The copyright processing apparatus queries the blockchain processing apparatus for output content of the copyright transaction according to the transaction ID of the copyright transaction currently carrying the copyright and the index of the copyright in the copyright transaction, and performs signature verification on the private key signature of the owner of the copyright by using an address included in the output content. For a specific process, refer to the process of S 1002.
(3) The copyright processing apparatus checks whether a digital content ID in product asset data is a subset of a digital content ID of the copyright transaction (for the query method, refer to the second step), and if no, the check fails. This process is optional.
(4) If the check fails, a product addition transaction failure response is returned to the digital copyright registration service.

S1105. The copyright processing apparatus sends the product transaction to the blockchain processing apparatus corresponding to the copyright processing apparatus, so that a process of persistently storing a block is implemented. The process of persistently storing the block is the same as the processes in FIG. 6 and FIG. 7, and is not further described herein.

S1106. The blockchain processing apparatus returns a product addition response to the copyright processing apparatus, where the response message includes an addition result and a product transaction ID that is generated during the persistent storage.

S1107. The copyright processing apparatus sends the product addition response to the copyright management client.

By performing the foregoing process, a process of adding a product online on the Internet is implemented; and by persistently storing a copyright management transaction of product addition in a blockchain, tamper resistance and trust of the product addition result are ensured. In addition, the owner of the copyright can control product addition.

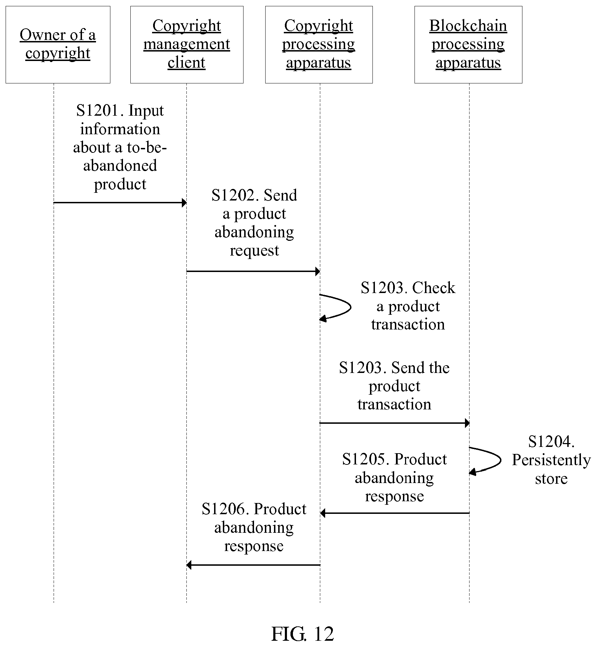

Procedure for abandoning a product by a creator: After a product is abandoned, a status of a license derived from or associated with the product becomes invalid. As shown in FIG. 12, the process of the method includes the following steps.

S1201. A copyright management client receives a command for abandoning a product and information about the to-be-abandoned product that are input by an owner of a copyright. The information about the to-be-abandoned product includes the specified to-be-abandoned product. S1202. The copyright management client constructs a product abandoning request, and sends the product abandoning request to a copyright processing apparatus. The product abandoning request includes the following fields: a request type, a transaction ID of a product transaction carrying the to-be-abandoned product, an index of a to-be-abandoned asset in the transaction, and a signature of an owner of the to-be-abandoned product.

S1203. The copyright processing apparatus receives the product abandoning request, and checks the product abandoning request; if the check succeeds, the copyright processing apparatus constructs a product transaction according to the product abandoning request, sets the transaction ID of the transaction carrying the to-be-abandoned asset and a signature of an owner of the to-be-abandoned asset in input content included in the product transaction to the transaction ID of the transaction carrying the to-be-abandoned product and the signature of the owner of the to-be-abandoned asset, and sets output content to null; and the copyright processing apparatus sends the product transaction to a blockchain processing apparatus corresponding to the copyright processing apparatus. The check method is as follows:
(1) The copyright processing apparatus queries the blockchain processing apparatus corresponding to the copyright processing apparatus for whether the transaction ID of the transaction currently carrying the to-be-abandoned product and an index of the to-be-abandoned product in the product transaction exist. For the query method, refer to the registration process. If the transaction ID and the index do not exist, the check fails.
(2) The copyright processing apparatus queries the blockchain processing apparatus for output content of the copyright transaction according to the transaction ID of the product transaction currently carrying the to-be-abandoned product and the index of the to-be-abandoned product currently carried in the product transaction, and performs signature verification on a private key signature of the owner of the copyright by using an address included in the output content. For a specific process, refer to S1002.
(3) If the check fails, a product abandoning transaction failure response is returned to the copyright processing apparatus.

S1204. The copyright processing apparatus sends the product transaction to the blockchain processing apparatus corresponding to the copyright processing apparatus, so that a process of persistently storing a block is implemented. The process of persistently storing the block is the same as the processes in FIG. 7 and FIG. 8, and is not further described herein.

S1205. The blockchain processing apparatus returns a product abandoning response to the copyright processing apparatus, where the response message includes an abandoning result, and an ID generated for the product transaction of the abandoning operation during persistent storage. S1206. The copyright processing apparatus sends the product abandoning response to the copyright management client.

By performing the foregoing process, a process of abandoning the product online on the Internet is implemented; and by persistently storing the product transaction of product abandoning in a blockchain, tamper resistance and trust of the product abandoning result are ensured. In addition, the owner of the copyright can control product abandoning.

After a creator adds a product, the creator may publish product information by using a third-party website (for example, a copyright operation system) and upload a digital content file that is packed and encrypted. A consumer and a content distributor purchase the corresponding product by using the website, and provide a destination address for receiving a license to the creator. The creator then issues the license according to the product purchased by the consumer and the content distributor and the destination address. In addition, the creator may escrow a private key of the added product to the trusted third-party website, and the website automatically issues the license according to the product purchased by the consumer and the content distributor. After purchasing the product, the consumer and the content distributor may download, from the website, the digital content file that is packed and encrypted, and uses content or distributes content according to the license issued by the creator.

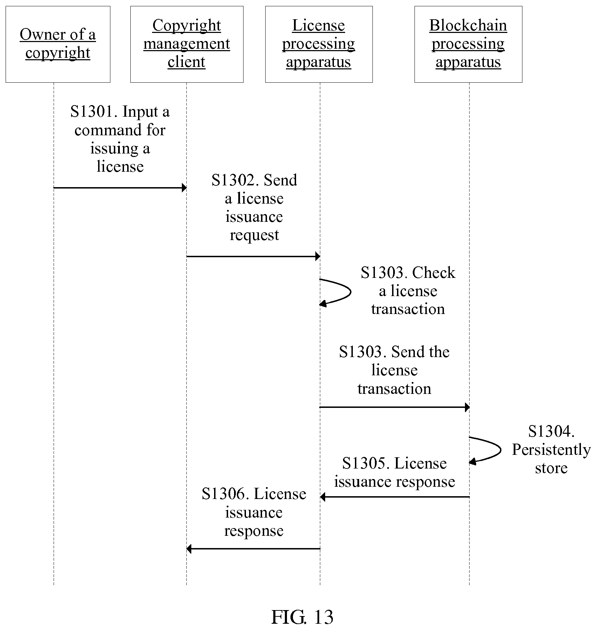

In addition, the creator may entrust the third-party website to provide an online content use service (streaming service). After the consumer purchases the product, the website issues the license to the consumer or provides the online content use service to the consumer. The following describes a process in which an owner of a copyright issues a license to a content distributor or a consumer. As shown in FIG. 13, the process includes the following steps.

S1301. A copyright management client receives a command for issuing a license and information about the to-be-issued license that are input by an owner of a copyright. The information about the to-be-issued license includes: (1) selecting a copyright and a product for which a license is to be issued; (2) providing a public key of a consumer or a content distributor, referred to as a license public key; and (3) a decryption key used to decrypt digital content, and permission information. S1302. The copyright management client constructs a license issuance request, and sends the license issuance request to a license processing apparatus. The license issuance request includes the following fields: (1) a request type: license issuance; (2) an address of an asset owner, generated from the license public key, where the address corresponds to the license public key on a one-to-one basis, and the address may be the license public key directly or may be a hash value of the license public key; (3) a content decryption key encrypted by using the license public key, where a plaintext decryption key can be obtained only when a license private key is used for decryption; (4) an ID of a product transaction carrying a product to which the to-be-issued license belongs, and an index of the product in the product transaction; (5) a private key signature of a product owner currently owning the product; (6) permission information; and (7) a digital content ID obtained from the product transaction.

S1303. The license processing apparatus receives the license issuance request, and checks the license issuance request; after the check is successful, the license processing apparatus constructs a license transaction according to the license issuance request, that is, input content in the license transaction is set to the transaction ID of the product transaction carrying the product, the index of the product in the product transaction, and the signature of the product owner, and output content is set to an address of an owner of the issued license; and the license processing apparatus sends the license transaction to a blockchain processing apparatus corresponding to the license processing apparatus. The check method is as follows:
(1) The license processing apparatus queries the blockchain processing apparatus corresponding to the license processing apparatus for whether the transaction ID of the product transaction currently carrying the product and the index of the product in the product transaction exist. For the query method, refer to the registration process. If the transaction ID and the index do not exist, the check fails.
(2) The license processing apparatus queries the blockchain processing apparatus for output content of the product transaction according to the transaction ID of the product transaction currently carrying the product and the index of the product in the product transaction, and performs signature verification on a private key signature of the owner of the copyright by using an address included in the output content.
(3) The license processing apparatus checks whether a digital content ID in the output content in the product transaction is equal to the digital content ID in the license issuance request, and if they are not equal, the check fails. This process is optional.
(4) If the check fails, a license transaction failure response is returned to the license processing apparatus.

S1304. The license processing apparatus sends the license transaction to the blockchain processing apparatus corresponding to the license processing apparatus, so that a process of persistently storing a block is implemented. The process of persistently storing the block is the same as the processes in FIG. 7 and FIG. 8, and is not further described herein.

S1305. The blockchain processing apparatus returns a license issuance response to the license processing apparatus, where the response message includes an issuance result and a license transaction ID generated during persistent storage.

S1306. The license processing apparatus sends the license issuance response to the copyright management client.

After the copyright management client receives a license issuance success response, the owner of the copyright may directly send the license transaction to the consumer or the content distributor, or may send only the license transaction ID and an index of the license in the license transaction to the consumer or the content distributor, and then the consumer or the content distributor queries a blockchain for information about the license transaction by using a copyright management client. The following describes a specific query process.

The copyright management client sends a license query request to the license processing apparatus, where the request includes the following information: the license transaction ID and the index of the license in the license transaction.

After receiving the license query request, the license processing apparatus sends the license query request to the corresponding blockchain processing apparatus.

The blockchain processing apparatus receives the license query request, and sends a query result to the license processing apparatus. A specific query method is as follows: The blockchain processing apparatus stores a transaction ID of each transaction, the index of the license in the license transaction, output content, and an association thereof, and may find output content of a corresponding license transaction according to a license transaction ID and the index of the license in the license transaction, and may determine, by using the address of the license owner included in the output content, whether the owner owns the license.

The license processing apparatus receives the query result, and sends the query result to the copyright management client.

If there are only two assets, that is, the copyright and the license, in a copyright management system, and there is no product asset, the license issuance process is similar to the foregoing process, except that S 1302 and S 1303 included are different. In S 1302, the field in (4) included in the license issuance request is an ID of a copyright transaction carrying the copyright to which the to-be-issued license belongs and an index of the copyright in the copyright transaction; the field in (5) included in the license issuance request is a signature affixed by using a product private key; and the field in (7) included in the license issuance request is a hash value of the digital content obtained from the copyright transaction. A process of S 1303 is as follows: The license processing apparatus receives the license issuance request, and checks the license issuance request; if the check succeeds, the license processing apparatus constructs a license transaction according to the license issuance request, that is, input content in the license transaction is set to the transaction ID of the copyright transaction carrying the copyright, the index of the copyright in the copyright transaction, and the signature of the owner of the copyright, and output content is set to the address of the owner of the issued license; and the license processing apparatus sends the license issuance transaction to the blockchain processing apparatus corresponding to the license processing apparatus. The check method is as follows:
(1) The license processing apparatus queries the blockchain processing apparatus corresponding to the license processing apparatus for whether the transaction ID of the copyright transaction currently carrying the copyright to which the license belongs and the index of the copyright in the copyright transaction exist. For the query method, refer to the registration process. If the transaction ID and the index do not exist, the check fails.
(2) The license processing apparatus queries the blockchain processing apparatus for output content of the copyright transaction according to the transaction ID of the copyright transaction currently carrying the copyright to which the license belongs and the index of the copyright in the copyright transaction, and performs signature verification on the private key signature of the owner of the copyright by using an address included in the output content.
(3) The license processing apparatus compares whether the digital content ID in the output content in the license issuance request is equal to a subset of a digital content ID in the output content in the copyright transaction, and if they are not equal, the check fails. This process is optional.
(4) If the check fails, a license transaction failure response is returned to the license processing apparatus.

By performing the foregoing process, a process of issuing the license online on the Internet is implemented; and by persistently storing the license transaction of license issuance in the blockchain, tamper resistance and trust of the license issuance result are ensured. In addition, the owner of the copyright can control license issuance.

After a content distributor purchases a product from an owner of a copyright and obtains a license issued by the owner of the copyright, the content distributor may sell digital content separately or sell digital content to its customer (consumer) in a form of a package. After the consumer purchases the digital content from the content distributor, the content distributor distributes the license to the consumer, and provides a digital content download link or provides an online content use service.

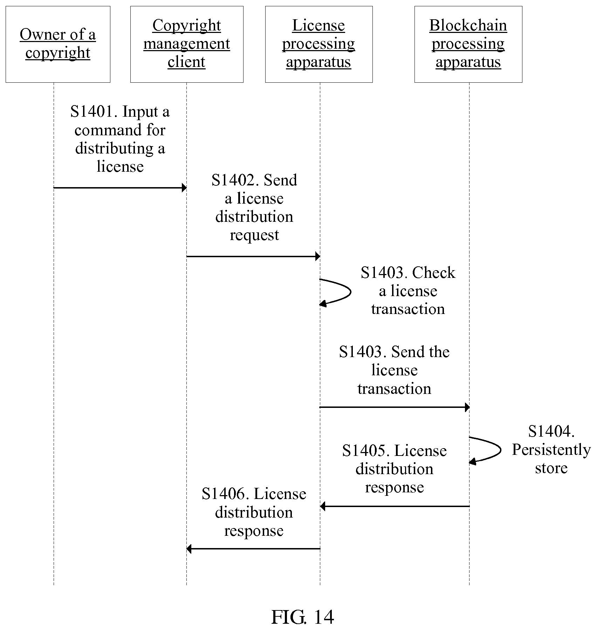

The following describes a process in which a content distributor distributes a license to a consumer. As shown in FIG. 14, the process includes the following steps.

S1401. A copyright management client receives a command for distributing a license and information about the to-be-distributed license that are input by an owner of a copyright. The information about the to-be-distributed license includes: (1) selecting the copyright for which the license is to be distributed and digital content; (2) providing a public key of an owner of the distributed license, that is, a public key of a consumer or a content distributor, referred to as a license public key; and (3) a decryption key used to decrypt the digital content, and permission information.

S1402. The copyright management client constructs a license distribution request, and sends the license distribution request to a license processing apparatus. The license distribution request includes the following fields: (1) a request type: license distribution; (2) an address of an asset owner of the distributed license, which is an address of the consumer herein; (3) a content decryption key encrypted by using the public key of the consumer, where a plaintext decryption key can be obtained only when a private key of the consumer is used for decryption; (4) a transaction ID of a license transaction to which the to-be-distributed license belongs, and an index of the license in the license transaction; (5) a private key signature of a license owner before distribution; (6) permission information; and (7) a digital content ID obtained from the license transaction to which the to-be-distributed license belongs.

S1403. The license processing apparatus receives the license distribution request, and checks the license distribution request; if the check succeeds, the license processing apparatus constructs a license transaction according to the license distribution request, that is, input content in the license transaction is set to the transaction ID of the license transaction carrying the distributed license, the index of the license in the license transaction, and the signature of the license owner (generally, a signature of the content distributor), and output content is set to the address of the owner of the distributed license and permission information; and the license processing apparatus sends the license transaction to a blockchain processing apparatus corresponding to the license processing apparatus. The check method is as follows:
(1) The license processing apparatus queries the blockchain processing apparatus corresponding to the license processing apparatus for whether the transaction ID of the license transaction currently carrying the license and the index of the license in the license transaction exist. For the query method, refer to the registration process. If the transaction ID and the index do not exist, the check fails.
(2) The license processing apparatus queries the blockchain processing apparatus for the output content of the license transaction according to the transaction ID of the license transaction currently carrying the license and the index of the license in the license transaction, and performs signature verification on a private key signature of the owner of the copyright by using the address included in the output content.
(3) The license processing apparatus queries a blockchain for all license transactions associated with a to-be-distributed license transaction. A specific query method is: the blockchain processing apparatus stores a transaction ID of each transaction, input content, output content, and an association thereof, where query input content includes the transaction ID of the to-be-distributed license and a transaction of an output index, and a query result is referred to as a distributed license transaction, and the following condition is calculated:
   Sum (Quantity of distribution times allowed for the distributed license transaction) + Count (Distributed license transaction) + Quantity of distribution times allowed in a license distribution constraint in the distribution request + 1 ≤ Quantity of distribution times allowed for the to-be-distributed license transaction. If the foregoing condition is not satisfied, the check fails. If a current time is not in a range of a start time to an end time in the distribution constraint of the to-be-distributed license transaction, the check fail.
(4) If a range of permission information in the distribution request is larger than a range of permission information of the to-be-distributed license transaction (by comparing the type of an operation allowed to be performed with an operation constraint), the check fails. This process is optional.
(5) The license processing apparatus compares whether a hash value of the digital content in output information of the to-be-distributed license transaction is equal to a hash value of the digital content in the distribution request, and if they are not equal, the check fails. This process is optional.
(6) If the check fails, a license transaction failure response is returned to the digital copyright license service. Otherwise, step 5 is performed to continue processing.

S1404. The license processing apparatus sends the license transaction to the blockchain processing apparatus corresponding to the license processing apparatus, so that a process of persistently storing a block is implemented. The process of persistently storing the block is the same as the processes in FIG. 6 and FIG. 7, and is not further described herein.

S1405. The blockchain processing apparatus returns a license distribution response to the license processing apparatus, where the response message includes a distribution result, a license transaction ID, and an output index.

S1406. The license processing apparatus returns the license distribution response to the copyright management client.

By performing the foregoing process, a process of distributing the license online on the Internet is implemented; and by persistently storing the license transaction of license distribution in the blockchain, tamper resistance and trust of the product abandoning result are ensured. In addition, the owner of the copyright can control copyright distribution.

The following describes a process of consuming digital content, including two scenarios. Scenario 1: A process of controlling content use is performed in a scenario in which digital content is used through download. Scenario 2: A process of controlling content use is performed in a scenario in which digital content is used online (such as viewing a video online or listening to music).

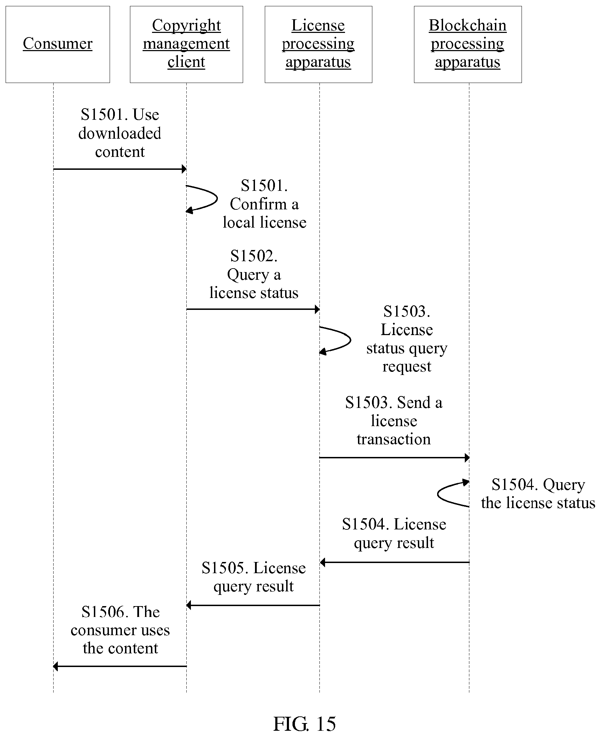

First, a process of the scenario 1 is described. As shown in FIG. 15, the process includes the following steps.

S1501. A copyright management client receives a command for consuming digitally encrypted digital content and a digital content ID carried in the digital content that are input by a consumer, where the digital content ID may be a digital content ID in a copyright registration process, or the digital content ID may be a digital content ID in a copyright transfer process. If a license cannot be found locally or a license is already invalid (for example, a quantity of times has been used up or a validity period expires), refer to the foregoing license distribution process or license issuance process to obtain the license. If a valid license can be found, step S 1502 continues to be performed.

S1502. The copyright management client sends a license status check request to a license processing apparatus, where the request includes the following information: checking a license status, an ID of a license transaction, and an index of the license in the license transaction.

S1503. The license processing apparatus sends the license status check request to a blockchain processing apparatus corresponding to the license processing apparatus.

S1504. The blockchain processing apparatus receives the license status check request, and sends a check result to the license processing apparatus. A method for checking the license status is: querying whether a product transaction associated with the license transaction is already abandoned, where if the product transaction is already abandoned, the status is invalid, or else, the status is valid (for a process of determining whether the product transaction associated with the license transaction is abandoned, refer to S1403).

S1505. The license processing apparatus receives the check result, and sends the check result to the copyright management client.

S1506. When the check result is that the status is valid, the copyright management client decrypts an encrypted content decryption key by using a private key of the consumer, to obtain the content decryption key. Then the decryption key may be used to decrypt the digital content.

The copyright management client controls use of the content according to the license. For example, a quantity of use times is limited by the license. In this case, every time the content is used, 1 is added to the quantity of use times; and when the quantity of use times is greater than the quantity limited by the license, the local license becomes invalid. The copyright management client plays or displays the used content.

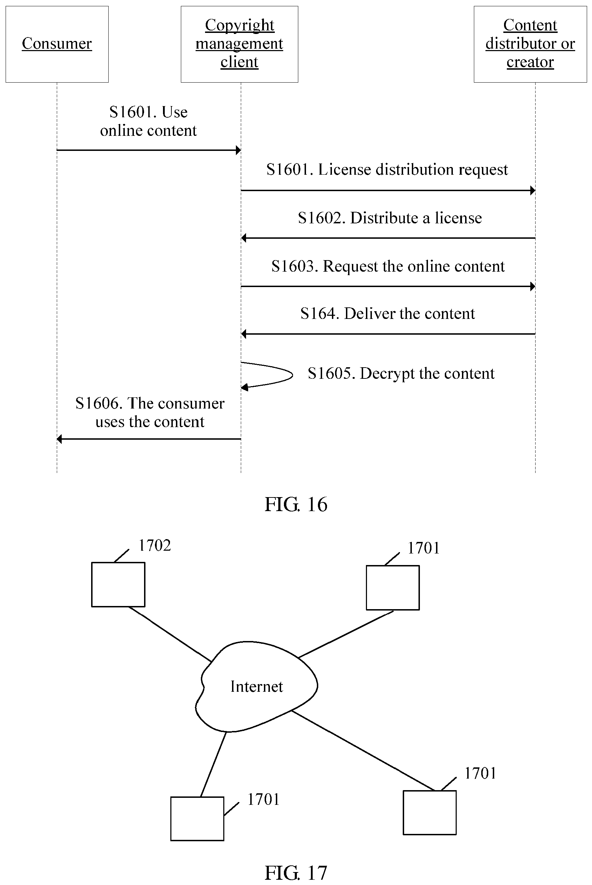

The following describes a process of the scenario 2. As shown in FIG. 16, the process includes the following steps.

S1601. A copyright management client receives a request input by a consumer for using digital content online, and sends a license distribution request to a content distributor or a creator, where the license distribution request includes a digital content ID and an address of the consumer, and the digital content ID may be a digital content ID in a copyright registration process or a digital content ID after transfer.

S1602. After receiving the license distribution request, the content distributor or the creator distributes a license to the consumer according to the digital content ID and the address of the consumer. For the process, refer to content in the chapters of FIG. 14 and FIG. 15.

S1603. After the license is distributed successfully, the copyright management client obtains the license, including a content decryption key encrypted by using a public key of the consumer, permission information, and the like, and delivers the digital content to the content distributor or the creator according to the digital content ID.

S1604. The content distributor or the creator returns encrypted content information to the copyright management client.

S1605. The copyright management client decrypts the encrypted content decryption key by using a private key of the consumer, to obtain the content decryption key. Then the decryption key may be used to decrypt the content.

S1606. The copyright management client controls use of the content according to the license. For example, a quantity of use times is limited by the license. In this case, every time the content is used, 1 is added to the quantity of use times; and when the quantity of use times is greater than the quantity limited by the license, the local license becomes invalid.

A secure and trustless copyright data blockchain is constructed by using digital cryptography and a distributed consensus algorithm, and a copyright management service is open to the Internet by using a P2P architecture. A public blockchain and a private blockchain are supported, where the private blockchain can be supervised by a government. Copyright registration and copyright registration transfer functions are implemented in the blockchain, so that copyright transaction data is irreversible in the blockchain, and proofs of a timestamp and content uniqueness are implemented. Based on a registered copyright record, a commercial product is created in the blockchain, and subsequently a license is distributed based on the product. An example of the product is a movie, including two products: a preview version and a high definition version, where the preview version is free, and the two products belong to a same copyright. Based on the registered product record, a license is issued to a distributor in the blockchain, where the license includes a content key, and the license may be further distributed to a consumer. When necessary, an owner may issue an abandoned license to the blockchain, and control a license already issued to a distributor. For example, an owner creates a free version of a fiction for reading, and wins rave reviews; the owner decides to terminate the free version in advance. In addition, the owner creates a premium product version, so that a user can read, based on a license issued for the new product, the fiction after paying. A license is issued to a final consumer in the blockchain, and the license includes a key that needs to be decrypted. When necessary, an owner may issue an abandoned license to the blockchain, and control an issued license, for example, cancel a digital content license. For example, a fiction writer publishes a fiction, and issues a million free licenses at the beginning, where the licenses will expire after one year. After the content is published, favorable feedbacks are received. After half a year, an abandoned license is issued, previous free read is terminated, and a one-yuan license without reading limitations is issued, guiding the user to obtain the content by paying.

As shown in FIG. 17, an embodiment of the present invention provides a copyright management system, including at least one blockchain apparatus 1701. The blockchain apparatus 1701 is configured to receive a copyright processing request, check the copyright processing request, and after the check succeeds, construct a copyright management transaction.

Further, the system further includes a persistent blockchain apparatus 1702. The blockchain apparatus 1701 is further configured to send the copyright management transaction to the persistent blockchain apparatus 1702 in a trusted network. The persistent blockchain apparatus 1702 is configured to check the copyright management transaction; and when at least one copyright management transaction is checked successfully, construct the at least one copyright management transaction into a block, and send the constructed block to all the blockchain apparatuses except the persistent blockchain apparatus itself in the trusted network for performing a block check, where the block includes an identifier of a previous block linked in blockchain data, a time at which the block is generated, and the at least one copyright management transaction. The persistent blockchain apparatus 1702 is further configured to receive block check responses returned by all the blockchain apparatuses except the persistent blockchain apparatus itself in the network, determine, according to the received block check responses, that the block check is successful, and persistently store the block in a current blockchain. The persistent blockchain apparatus 1702 is further configured to instruct all blockchain apparatuses except the persistent blockchain apparatus itself to synchronize the persistently stored block.

Further, the system further includes a blockchain apparatus elected from all blockchain apparatuses in a blockchain in a trusted network to be a persistent blockchain apparatus. The blockchain apparatus 1701 is further configured to send the copyright management transaction to all blockchain apparatuses except the blockchain apparatus itself in the trusted network. The blockchain apparatus 1701 is further configured to receive at least one copyright management transaction sent by any one or more blockchain apparatuses in the trusted network. The persistent blockchain apparatus 1702 is configured to receive at least one copyright management transaction sent by any one or more blockchain apparatuses in the trusted network, create an election transaction, construct the at least one copyright management transaction and the election transaction into a block, and persistently store the block in the current blockchain. The persistent blockchain apparatus 1702 is further configured to instruct all blockchain apparatuses except the persistent blockchain apparatus 1702 itself to synchronize the persistently stored block.

Further, the blockchain apparatus 1701 is specifically configured to: when the copyright processing request is specifically a copyright registration request, determine that content included in the copyright registration request is complete; and determine, according to the digital content identifier, that the copyright is not registered, where the copyright registration request includes an address of an owner of the copyright, identity information of a creator, identity information of the owner of the copyright, basic information of digital content, descriptions about a situation of rights of a work, and the digital content identifier.

Further, the blockchain apparatus 1701 is specifically further configured to set input content included in the copyright management transaction to null, and set output content to the address of the owner of the copyright in copyright registration.

Further, the blockchain apparatus 1701 is specifically configured to: when the copyright processing request is specifically a copyright transfer request, determine, according to an identifier of a transaction of the to-be-transferred copyright, that the copyright is not transferred, and determine, according to a signature of an owner of the copyright, that the owner of the copyright owns the copyright, where the copyright transfer request includes the identifier of the transaction of the to-be-transferred copyright and the signature of the owner of the copyright.

Further, the blockchain apparatus 1701 is specifically configured to set input content included in the copyright management transaction to the transaction identifier of the copyright transaction carrying the copyright before the copyright is transferred and the signature of the owner of the copyright before the copyright is transferred, and set output content to an address of an owner of the copyright after the copyright is transferred.

Further, that the blockchain apparatus 1701 is specifically configured to check the copyright processing request when the copyright processing request is a product addition request specifically includes: determining, according to an identifier of a transaction of the copyright, that the copyright is not transferred; and determining, according to a signature of an owner of the copyright, that the owner of the copyright owns the copyright, where the product addition request includes an address of the owner of the copyright, the identifier of the transaction of the copyright, price information, and a signature of the owner of the copyright.

Further, the blockchain apparatus 1701 is specifically configured to set input content included in a product transaction to the transaction identifier of the copyright transaction currently carrying the copyright and the signature of the owner of the copyright, and set output content to an address of an owner of the added product.

Further, the blockchain apparatus 1701 is specifically configured to: when the copyright processing request is specifically a product abandoning request, determine, according to a transaction identifier of a transaction carrying a to-be-abandoned product, that the product is not abandoned; and determine, according to a signature of an owner of the to-be-abandoned product, that an owner of the copyright owns the product, where the product abandoning request includes the transaction identifier of the transaction carrying the to-be-abandoned product and the signature of the owner of the to-be-abandoned product.

Further, the blockchain apparatus 1701 is specifically configured to set input content included in the product transaction to the transaction identifier of the product transaction carrying the to-be-abandoned product and a signature of an owner of a to-be-abandoned asset, and set output content to null.

Further, the blockchain apparatus 1701 is specifically configured to: when the copyright processing request is a license issuance request, determine, according to an identifier of a product transaction carrying a product to which a to-be-issued license belongs, that the product is not abandoned; and determine, according to a signature of a product owner that owns the product, that an owner of the copyright owns the product, where the license issuance request includes the identifier of the product transaction carrying the product to which the to-be-issued license belongs, and the signature of the product owner that owns the product.

Further, the blockchain apparatus 1701 is specifically configured to set input content included in a license transaction to the transaction identifier of the product transaction carrying the product and the signature of the product owner, and set output content to an address of an owner of the issued license.

Further, the blockchain apparatus 1701 is specifically configured to: when the copyright processing request is specifically a license distribution request, determine, according to an identifier of a product transaction of a product to which the to-be-issued license belongs, that the product is not abandoned; and determine, according to a signature of a product owner that owns the product, that an owner of the copyright owns the product, where the license distribution request includes the identifier of the product transaction carrying the product to which the to-be-issued license belongs, and a signature of an owner of the license before the distribution. Further, the blockchain apparatus 1701 is specifically configured to set input content included in a license transaction to the transaction identifier of the product transaction carrying the product and the signature of the product owner, and set output content to an address of an owner of the issued license.

In this embodiment, the blockchain apparatus 1701 or the persistent blockchain apparatus 1702 is presented in a form of a functional unit. Herein the "unit" may be an application-specific integrated circuit (application-specific integrated circuit, ASIC), a circuit, a processor and a memory for executing one or more software or firmware programs, an integrated logical circuit, and/or other components that can provide the foregoing functions. In a simple embodiment, persons skilled in the art may think that the blockchain apparatus 1701 or the persistent blockchain apparatus 1702 may use the form shown in FIG. 6. The blockchain apparatus 1701 or the persistent blockchain apparatus 1702 may be implemented by the processor and the memory in FIG. 6.

The blockchain apparatus receives the copyright processing request. For example, the copyright processing request may be a copyright registration request, a copyright transfer request, a product addition request, a product abandoning request, a license issuance request, or a license distribution request. Then the blockchain apparatus checks the copyright processing request. Different requests have different check content. After the check succeeds, the blockchain apparatus constructs a corresponding copyright management transaction, and sends the copyright management transaction to the persistent blockchain apparatus in the trusted network for performing persistent processing, or sends the copyright management transaction to a qualified blockchain apparatus in an open network for performing persistent processing. Because all blockchain apparatuses check the copyright processing request, and the copyright management transaction is constructed only when the check is successful, correctness and legality of a copyright processing operation are ensured. Because the copyright management transaction is persistently processed, once the copyright management transaction is persistently stored, it is difficult to change the copyright management transaction. Therefore, unchangeability of the copyright management transaction and uniqueness of a time proof are ensured. Herein it is further explained that persistency may be understood as writing, or adding, or the like, or may be understood as permanently storing a copyright management transaction.

Persons skilled in the art should understand that the embodiments of this application may be provided as a method, or a computer program product. Therefore, the present application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction device. The instruction device implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn the basic inventive concept.

Obviously, persons skilled in the art can make various modifications and variations to this application. This application is intended to cover these modifications and variations of this application provided that they fall within the scope of protection defined by the following claims and their equivalent technologies.

## Claims

1. A copyright management system, comprising at least one blockchain apparatus and a persistent blockchain apparatus, wherein the blockchain apparatus is configured to receive a copyright processing request, construct a copyright management transaction according to the copyright processing request, and send the copyright management transaction to the persistent blockchain apparatus; and
the persistent blockchain apparatus is configured to receive the copyright management transaction sent by the blockchain apparatus, construct the copyright management transaction into a block, and store the block in a blockchain for processing, wherein the blockchain is stored in all blockchain apparatuses in a network;
wherein the copyright process request is a copyright registration request, copyright transfer request, a product creation request, a product abandoning request, a license distribution request or a license issuance request;
wherein the system is **characterised in that** the copyright management transaction is classified into a copyright transaction, a product transaction or a license transaction; and
**in that** the blockchain apparatus is specifically configured to: when the copyright processing request is specifically a license distribution request, determine, according to an identifier of a product transaction of a product to which the to-be-issued license belongs, that the product is not abandoned; and determine, according to a signature of a product owner that owns the product, that an owner of a copyright owns the product, wherein the license distribution request comprises the identifier of the product transaction carrying the product to which the to-be-issued license belongs and a signature of an owner of the license before the distribution.

2. The system according to claim 1, wherein the persistent blockchain apparatus is pre-elected from all the blockchain apparatuses; the persistent blockchain apparatus is specifically configured to send the copyright management transaction to all the blockchain apparatuses in the network before constructing the copyright management transaction into the block, so that all the blockchain apparatuses check the copyright management transaction; and
the persistent blockchain apparatus is specifically configured to: before storing the block in the blockchain for processing, send the constructed block to all the blockchain apparatuses for performing a block check, wherein the block comprises an identifier of a previous block linked in blockchain data, a time at which the block is generated, and the copyright management transaction; and receive block check responses returned by all the blockchain apparatuses in the network, and determine, according to the received block check responses, that the block check is successful.

3. The system according to claim 1, wherein the persistent blockchain apparatus is periodically elected from all blockchain apparatuses, wherein
the blockchain apparatus is further configured to send the copyright management transaction to all the blockchain apparatuses in the network except the blockchain apparatus itself, receive at least one copyright management transaction sent by any one or a plurality of blockchain apparatuses, and check the copyright management transaction; and
the persistent blockchain apparatus is specifically configured to receive at least one copyright management transaction sent by any one or a plurality of blockchain apparatuses, and check the copyright management transaction; after being elected to be the persistent blockchain apparatus, create an election transaction; and when creating a block, construct the election transaction and the copyright management transaction together into the block.

4. The system according to claim 1, wherein the blockchain apparatus is specifically configured to: when the copyright processing request is specifically a copyright registration request, determine that content comprised in the copyright registration request is complete; and determine, according to a digital content identifier, that a copyright is not registered, wherein the copyright registration request comprises an address of an owner of the copyright, identity information of a creator, identity information of the owner of the copyright, basic information of digital content, descriptions about a situation of rights of the digital content, and the digital content identifier.

5. The system according to claim 4, wherein the blockchain apparatus is specifically further configured to set input content comprised in the copyright management transaction to null, and set output content to the address of the owner of the copyright in copyright registration.

6. The system according to claim 1, wherein the blockchain apparatus is specifically configured to: when the copyright processing request is specifically a copyright transfer request, determine, according to an identifier of a copyright transaction of the to-be-transferred copyright, that the copyright is not transferred, and determine, according to a signature of an owner of the copyright, that the owner of the copyright owns the copyright, wherein the copyright transfer request comprises the identifier of the transaction of the to-be-transferred copyright and the signature of the owner of the copyright.

7. The system according to claim 6, wherein the blockchain apparatus is specifically configured to set input content comprised in the copyright management transaction to the transaction identifier of the copyright transaction carrying the copyright before the copyright is transferred and the signature of the owner of the copyright before the copyright is transferred, and set output content to an address of an owner of the copyright after the copyright is transferred.

8. The system according to claim 1, wherein the blockchain apparatus is specifically configured to set input content comprised in a license transaction to the transaction identifier of the product transaction carrying the product and the signature of the product owner, and set output content to an address of an owner of the issued license.

9. A digital content copyright management method, comprising:
receiving a copyright processing request, and constructing a copyright management transaction according to the copyright processing request; and
storing the copyright management transaction in a blockchain for processing, wherein the blockchain is stored in all blockchain apparatuses;
wherein the copyright process request is a copyright registration request, copyright transfer request, a product creation request, a product abandoning request, a license distribution request or a license issuance request;
the method being **characterised in that** the copyright management transaction is classified into a copyright transaction, a product transaction or a license transaction; and
and **in that** when the copyright processing request is specifically a license distribution request, the method further comprises: determining, according to an identifier of a product transaction of a product to which the to-be-issued license belongs, that the product is not abandoned; and determining, according to a signature of a product owner that owns the product, that an owner of a copyright owns the product, wherein the license distribution request comprises the identifier of the product transaction carrying the product to which the to-be-issued license belongs and a signature of an owner of the license before the distribution.

10. The method according to claim 9, wherein the storing the copyright management transaction in a blockchain for processing is specifically:
sending the copyright management transaction to a persistent blockchain apparatus, and checking the copyright management transaction, wherein the persistent blockchain apparatus is pre-elected from all the blockchain apparatuses;
when checking at least one copyright management transaction, constructing, by the persistent blockchain apparatus, the at least one copyright management transaction into a block, and sending the constructed block to all blockchain apparatuses in a trusted network for performing a block check, wherein the block comprises an identifier of a previous block linked in blockchain data, a time at which the block is generated, and the at least one copyright management transaction;
receiving, by the persistent blockchain apparatus, block check responses returned by all the blockchain apparatuses except the persistent blockchain apparatus;
determining, by the persistent blockchain apparatus according to the received block check responses, that the block check is successful, and storing the block in the blockchain; and
instructing, by the persistent blockchain apparatus, all the blockchain apparatuses in the network to synchronize the stored block.

11. The method according to claim 9, wherein the storing the copyright management transaction in a blockchain for processing is specifically:
sending the copyright management transaction to all other blockchain apparatuses in a network;
electing, from all blockchain apparatuses, a blockchain apparatus to be a persistent blockchain apparatus, and creating an election transaction;
constructing, by the persistent blockchain apparatus, at least one copyright management transaction and the election transaction into a block, and storing the block in the current blockchain; and
instructing, by the persistent blockchain apparatus, all the blockchain apparatuses in the network to synchronize the stored block.

12. The method according to claim 9, wherein the copyright processing request is specifically a copyright registration request, and the copyright registration request comprises an address of an owner of a copyright, identity information of a creator, identity information of the owner of the copyright, basic information of digital content, descriptions about a situation of rights of a work, and a digital content identifier; and
the checking the copyright processing request specifically comprises: determining that content comprised in the copyright registration request is complete; and determining, according to the digital content identifier, that the copyright is not registered.

13. The method according to claim 12, wherein the constructing a copyright management transaction specifically comprises:
setting input content comprised in the copyright management transaction to null, and setting output content to the address of the owner of the copyright in copyright registration.

14. The method according to claim 9, wherein the copyright processing request is specifically a copyright transfer request, and the copyright transfer request comprises an identifier of a copyright transaction of a to-be-transferred copyright and a signature of an owner of the copyright; and
the checking the copyright processing request specifically comprises: determining, according to the identifier of the transaction of the to-be-transferred copyright, that the copyright is not transferred, and determining, according to the signature of the owner of the copyright, that the owner of the copyright owns the copyright.

15. The method according to claim 14, wherein the constructing a copyright management transaction specifically comprises:
setting input content comprised in the copyright management transaction to the transaction identifier of the copyright transaction carrying the copyright before the copyright is transferred and the signature of the owner of the copyright before the copyright is transferred, and setting output content to an address of an owner of the copyright after the copyright is transferred.

16. The method according to claim 9, wherein the copyright processing request is specifically a license issuance request, and the license issuance request comprises an identifier of a product transaction carrying a product to which a to-be-issued license belongs and a signature of a product owner that owns the product; and
the checking the copyright processing request specifically comprises: determining, according to the identifier of the product transaction carrying the product to which the to-be-issued license belongs, that the product is not abandoned; and determining, according to the signature of the product owner that owns the product, that an owner of the copyright owns the product.

17. The method according to claim 16, wherein the constructing a copyright management transaction specifically comprises:
setting input content comprised in a license transaction to the transaction identifier of the product transaction carrying the product and the signature of the product owner, and setting output content to an address of an owner of the issued license.

18. The method according to claim 9, wherein the copyright processing request is specifically a license distribution request, and the license distribution request comprises an identifier of a product transaction carrying a product to which a to-be-issued license belongs and a signature of an owner of the license before the distribution; and
the checking the copyright processing request specifically comprises: determining, according to the identifier of the product transaction of the product to which the to-be-issued license belongs, that the product is not abandoned; and determining, according to a signature of a product owner that owns the product, that an owner of the copyright owns the product.

19. The method according to claim 18, wherein the constructing a copyright management transaction specifically comprises:
setting input content comprised in a license transaction to the transaction identifier of the product transaction carrying the product and the signature of the product owner, and setting output content to an address of an owner of the issued license.

## Patentansprüche

1. System zur Verwaltung von Urheberrechten, umfassend mindestens eine Blockchain-Vorrichtung und eine dauerhafte Blockchain-Vorrichtung, wobei die Blockchain-Vorrichtung konfiguriert ist, um eine Urheberrechtsverarbeitungsanfrage zu empfangen, eine Urheberrechtsverwaltungstransaktion gemäß der Urheberrechtsverarbeitungsanfrage aufzubauen und die Urheberrechtsverwaltungstransaktion an die dauerhafte Blockchain-Vorrichtung zu senden; und
wobei die dauerhafte Blockchain-Vorrichtung konfiguriert ist, um die Urheberrechtsverwaltungstransaktion, die durch die Blockchain-Vorrichtung gesendet wird, zu empfangen, die Urheberrechtsverwaltungstransaktion zu einem Block aufzubauen und den Block in einer Blockchain zur Verarbeitung zu speichern, wobei die Blockchain in allen Blockchain-Vorrichtungen in einem Netzwerk gespeichert ist;
wobei die Urheberrechtsverarbeitungsanfrage eine Urheberrechtsregistrierungsanfrage, eine Urheberrechtsübertragungsanfrage, eine Produkterstellungsanfrage, eine Produktaufgabeanfrage, eine Lizenzverteilungsanfrage oder eine Lizenzausgabeanfrage ist; wobei das System **dadurch gekennzeichnet ist, dass** die Urheberrechtsverwaltungstransaktion als eine Urheberrechtstransaktion, eine Produkttransaktion oder eine Lizenztransaktion klassifiziert ist; und
dass die Blockchain-Vorrichtung spezifisch zu Folgendem konfiguriert ist: wenn die Urheberrechtsverarbeitungsanfrage spezifisch eine Lizenzverteilungsanfrage ist, Bestimmen, gemäß einer Kennung einer Produkttransaktion eines Produkts, zu dem die auszustellende Lizenz gehört, dass das Produkt nicht aufgegeben ist; und Bestimmen, gemäß einer Unterschrift eines Produkteigentümers, dem das Produkt gehört, dass einem Eigentümer eines Urheberrechts das Produkt gehört, wobei die Lizenzverteilungsanfrage die Kennung der Produkttransaktion, die das Produkt trägt, zu dem die auszustellende Lizenz gehört, und eine Unterschrift eines Eigentümers der Lizenz vor der Verteilung umfasst.

2. System nach Anspruch 1, wobei die dauerhafte Blockchain-Vorrichtung aus allen Blockchain-Vorrichtungen vorgewählt ist; die dauerhafte Blockchain-Vorrichtung spezifisch konfiguriert ist, um die Urheberrechtsverwaltungstransaktion an alle Blockchain-Vorrichtungen in dem Netzwerk zu senden, bevor die Urheberrechtsverwaltungstransaktion zu dem Block aufgebaut wird, sodass alle Blockchain-Vorrichtungen die Urheberrechtsverwaltungstransaktion prüfen; und
die dauerhafte Blockchain-Vorrichtung spezifisch zu Folgendem konfiguriert ist: vor dem Speichern des Blocks in der Blockchain zur Verarbeitung, Senden des aufgebauten Blocks an alle Blockchain-Vorrichtungen, um eine Blockprüfung durchzuführen, wobei der Block eine Kennung eines vorherigen Blocks, der in Blockchain-Daten verknüpft ist, eine Zeit, zu welcher der Block erzeugt wird, und die Urheberrechtsverwaltungstransaktion umfasst; und Empfangen von Blockprüfungsantworten, die durch alle Blockchain-Vorrichtungen in dem Netzwerk zurückgegeben werden, und Bestimmen, gemäß den empfangenen Blockprüfungsantworten, dass die Blockprüfung erfolgreich ist.

3. System nach Anspruch 1, wobei die dauerhafte Blockchain-Vorrichtung periodisch aus allen Blockchain-Vorrichtungen ausgewählt wird, wobei
die Blockchain-Vorrichtung ferner konfiguriert ist, um die Urheberrechtsverwaltungstransaktion an alle Blockchain-Vorrichtungen in dem Netzwerk mit Ausnahme der Blockchain-Vorrichtung selbst zu senden, mindestens eine Urheberrechtsverwaltungstransaktion, die durch eine beliebige oder eine Vielzahl von Blockchain-Vorrichtungen gesendet wird, zu empfangen und die Urheberrechtsverwaltungstransaktion zu prüfen; und
die dauerhafte Blockchain-Vorrichtung spezifisch konfiguriert ist, um mindestens eine Urheberrechtsverwaltungstransaktion zu empfangen, die durch eine beliebige oder eine Vielzahl von Blockchain-Vorrichtungen gesendet wird, und die Urheberrechtsverwaltungstransaktion zu prüfen; nachdem sie ausgewählt wurde, die dauerhafte Blockchain-Vorrichtung zu sein, eine Auswahltransaktion zu erstellen; und wenn ein Block erstellt wird, die Auswahltransaktion und die Urheberrechtsverwaltungstransaktion zusammen zu dem Block aufzubauen.

4. System nach Anspruch 1, wobei die Blockchain-Vorrichtung spezifisch zu Folgendem konfiguriert ist: wenn die Urheberrechtsverarbeitungsanfrage spezifisch eine Urheberrechtsregistrierungsanfrage ist, Bestimmen, dass Inhalt, der in der Urheberrechtsregistrierungsanfrage enthalten ist, vollständig ist; und Bestimmen, gemäß einer Digitalinhaltskennung, dass kein Urheberrecht registriert ist, wobei die Urheberrechtsregistrierungsanfrage eine Adresse eines Eigentümers des Urheberrechts, Identitätsinformationen eines Erstellers, Identitätsinformationen des Eigentümers des Urheberrechts, Basisinformationen zu digitalem Inhalt, Beschreibungen über eine Situation von Rechten des digitalen Inhalts und die Digitalinhaltskennung umfasst.

5. System nach Anspruch 4, wobei die Blockchain-Vorrichtung spezifisch ferner konfiguriert ist, um Eingabeinhalt, der in der Urheberrechtsverwaltungstransaktion enthalten ist, auf null zu setzen und Ausgabeinhalt auf die Adresse des Eigentümers des Urheberrechts in der Urheberrechtsregistrierung zu setzen.

6. System nach Anspruch 1, wobei die Blockchain-Vorrichtung spezifisch zu Folgendem konfiguriert ist: wenn die Urheberrechtsverarbeitungsanfrage spezifisch eine Urheberrechtsübertragungsanfrage ist, Bestimmen, gemäß einer Kennung einer Urheberrechtstransaktion des zu übertragenden Urheberrechts, dass das Urheberrecht nicht übertragen wird, und Bestimmen, gemäß einer Unterschrift eines Eigentümers des Urheberrechts, dass dem Eigentümer des Urheberrechts das Urheberrecht gehört, wobei die Urheberrechtsübertragungsanfrage die Kennung der Transaktion des zu übertragenden Urheberrechts und die Unterschrift des Eigentümers des Urheberrechts umfasst.

7. System nach Anspruch 6, wobei die Blockchain-Vorrichtung spezifisch konfiguriert ist, um Eingabeinhalt, der in der Urheberrechtsverwaltungstransaktion enthalten ist, auf die Transaktionskennung der Urheberrechtstransaktion, die das Urheberrecht trägt, bevor das Urheberrecht übertragen wird, und die Unterschrift des Eigentümers des Urheberrechts, bevor das Urheberrecht übertragen wird, zu setzen, und Ausgabeinhalt auf eine Adresse eines Eigentümers des Urheberrechts zu setzen, nachdem das Urheberrecht übertragen ist.

8. System nach Anspruch 1, wobei die Blockchain-Vorrichtung spezifisch konfiguriert ist, um Eingabeinhalt, der in einer Lizenztransaktion enthalten ist, auf die Transaktionskennung der Produkttransaktion, die das Produkt trägt, und die Unterschrift des Produkteigentümers zu setzen, und Ausgabeinhalt auf eine Adresse eines Eigentümers der ausgestellten Lizenz zu setzen.

9. Verfahren zur Verwaltung von Urheberrechten für digitalen Inhalt, umfassend:
Empfangen einer Urheberrechtsverarbeitungsanfrage und Aufbauen einer Urheberrechtsverwaltungstransaktion gemäß der Urheberrechtsverarbeitungsanfrage; und
Speichern der Urheberrechtsverwaltungstransaktion in einer Blockchain zur Verarbeitung, wobei die Blockchain in allen Blockchain-Vorrichtungen gespeichert ist;
wobei die Urheberrechtsverarbeitungsanfrage eine Urheberrechtsregistrierungsanfrage, eine Urheberrechtsübertragungsanfrage, eine Produkterstellungsanfrage, eine Produktaufgabeanfrage, eine Lizenzverteilungsanfrage oder eine Lizenzausgabeanfrage ist;
wobei das Verfarhen **dadurch gekennzeichnet ist, dass** die Urheberrechtsverwaltungstransaktion in eine Urheberrechtstransaktion, eine Produkttransaktion oder eine Lizenztransaktion klassifiziert ist; und dass,
wenn die Urheberrechtsverarbeitungsanfrage spezifisch eine Lizenzverteilungsanfrage ist, das Verfahren ferner Folgendes umfasst: Bestimmen, gemäß einer Kennung einer Produkttransaktion eines Produkts, zu dem die auszustellende Lizenz gehört, dass das Produkt nicht aufgegeben ist; und Bestimmen, gemäß einer Unterschrift eines Produkteigentümers, dem das Produkt gehört, dass einem Eigentümer eines Urheberrechts das Produkt gehört, wobei die Lizenzverteilungsanfrage die Kennung der Produkttransaktion, die das Produkt trägt, zu dem die auszustellende Lizenz gehört, und eine Unterschrift eines Eigentümers der Lizenz vor der Verteilung umfasst.

10. Verfahren nach Anspruch 9, wobei das Speichern der Urheberrechtsverwaltungstransaktion in einer Blockchain zur Verarbeitung spezifisch Folgendes ist:
Senden der Urheberrechtsverwaltungstransaktion an eine dauerhafte Blockchain-Vorrichtung und Prüfen der Urheberrechtsverwaltungstransaktion, wobei die dauerhafte Blockchain-Vorrichtung aus allen Blockchain-Vorrichtungen vorausgewählt ist;
beim Prüfen von mindestens einer Urheberrechtsverwaltungstransaktion, Aufbauen, durch die dauerhafte Blockchain-Vorrichtung, der mindestens einen Urheberrechtsverwaltungstransaktion zu einem Block und Senden des aufgebauten Blocks an alle Blockchain-Vorrichtungen in einem vertrauenswürdigen Netzwerk zum Durchführen einer Blockprüfung, wobei der Block eine Kennung eines vorherigen Blocks, der in Blockchain-Daten verknüpft ist, eine Zeit, zu welcher der Block erzeugt wird, und die mindestens eine Urheberrechtsverwaltungstransaktion umfasst;
Empfangen, durch die dauerhafte Blockchain-Vorrichtung, von Blockprüfungsantworten, die durch alle Blockchain-Vorrichtungen mit Ausnahme der dauerhaften Blockchain-Vorrichtung zurückgegeben werden;
Bestimmen, durch die dauerhafte Blockchain-Vorrichtung gemäß den empfangenen Blockprüfungsantworten, dass die Blockprüfung erfolgreich ist, und Speichern des Blocks in der Blockchain; und Anweisen, durch die dauerhafte Blockchain-Vorrichtung, aller Blockchain-Vorrichtungen in dem Netzwerk, den gespeicherten Block zu synchronisieren.

11. Verfahren nach Anspruch 9, wobei das Speichern der Urheberrechtsverwaltungstransaktion in einer Blockchain zur Verarbeitung spezifisch Folgendes ist:
Senden der Urheberrechtsverwaltungstransaktion an alle anderen Blockchain-Vorrichtungen in einem Netzwerk;
Auswählen, aus allen Blockchain-Vorrichtungen, einer Blockchain-Vorrichtung als dauerhafte Blockchain-Vorrichtung und Erstellen einer Auswahltransaktion;
Aufbauen, durch die dauerhafte Blockchain-Vorrichtung, von mindestens einer Urheberrechtsverwaltungstransaktion und der Auswahltransaktion zu einem Block und Speichern des Blocks in der aktuellen Blockchain; und
Anweisen, durch die dauerhafte Blockchain-Vorrichtung, aller Blockchain-Vorrichtungen in dem Netzwerk, den gespeicherten Block zu synchronisieren.

12. Verfahren nach Anspruch 9, wobei die Urheberrechtsverarbeitungsanfrage spezifisch eine Urheberrechtsregistrierungsanfrage ist und die Urheberrechtsregistrierungsanfrage eine Adresse eines Eigentümers eines Urheberrechts, Identitätsinformationen eines Erstellers, Identitätsinformationen des Eigentümers des Urheberrechts, Basisinformationen zu digitalem Inhalt, Beschreibungen einer Situation von Rechten an einem Werk und eine Digitalinhaltskennung umfasst; und
das Prüfen der Urheberrechtsverarbeitungsanfrage spezifisch Folgendes umfasst: Bestimmen, dass Inhalt, der in der Urheberrechtsregistrierungsanfrage enthalten ist, vollständig ist; und Bestimmen, gemäß der Digitalinhaltskennung, dass das Urheberrecht nicht registriert ist.

13. Verfahren nach Anspruch 12, wobei das Aufbauen einer Urheberrechtsverwaltungstransaktion spezifisch Folgendes umfasst:
Setzen von Eingabeinhalt, der in der Urheberrechtsverwaltungstransaktion enthalten ist, auf null, und Setzen von Ausgabeinhalt auf die Adresse des Eigentümers des Urheberrechts in der Urheberrechtsregistrierung.

14. Verfahren nach Anspruch 9, wobei die Urheberrechtsverarbeitungsanfrage spezifisch eine Urheberrechtsübertragungsanfrage ist und die Urheberrechtsübertragungsanfrage eine Kennung einer Urheberrechtstransaktion eines zu übertragenden Urheberrechts und eine Unterschrift eines Eigentümers des Urheberrechts umfasst; und
das Prüfen der Urheberrechtsbearbeitungsanfrage spezifisch Folgendes umfasst: Bestimmen, gemäß der Kennung der Transaktion des zu übertragenden Urheberrechts, dass das Urheberrecht nicht übertragen wird, und Bestimmen, gemäß der Unterschrift des Eigentümers des Urheberrechts, dass dem Eigentümer des Urheberrechts das Urheberrecht gehört.

15. Verfahren nach Anspruch 14, wobei das Aufbauen einer Urheberrechtsverwaltungstransaktion spezifisch Folgendes umfasst:
Setzen von Eingabeinhalt, der in der Urheberrechtsverwaltungstransaktion enthalten ist, auf die Transaktionskennung der Urheberrechtstransaktion, die das Urheberrecht trägt, bevor das Urheberrecht übertragen wird, und die Unterschrift des Eigentümers des Urheberrechts, bevor das Urheberrecht übertragen wird, und Setzen von Ausgabeinhalt auf eine Adresse eines Eigentümers des Urheberrechts, nachdem das Urheberrecht übertragen ist.

16. Verfahren nach Anspruch 9, wobei die Urheberrechtsverarbeitungsanfrage spezifisch eine Lizenzausgabeanfrage ist und die Lizenzausgabeanfrage eine Kennung einer Produkttransaktion, die ein Produkt trägt, zu dem eine auszugebende Lizenz gehört, und eine Unterschrift eines Produkteigentümers, dem das Produkt gehört, umfasst; und
das Prüfen der Urheberrechtsverarbeitungsanfrage spezifisch Folgendes umfasst: Bestimmen, gemäß der Kennung der Produkttransaktion, die das Produkt trägt, zu dem die auszustellende Lizenz gehört, dass das Produkt nicht aufgegeben ist; und Bestimmen, gemäß der Unterschrift des Produkteigentümers, dem das Produkt gehört, dass einem Eigentümer des Urheberrechts das Produkt gehört.

17. Verfahren nach Anspruch 16, wobei das Aufbauen einer Urheberrechtsverwaltungstransaktion spezifisch Folgendes umfasst:
Setzen von Eingabeinhalt, der in einer Lizenztransaktion enthalten ist, auf die Transaktionskennung der Produkttransaktion, die das Produkt trägt, und die Unterschrift des Produkteigentümers, und Setzen von Ausgabeinhalt auf eine Adresse eines Eigentümers der ausgestellten Lizenz.

18. Verfahren nach Anspruch 9, wobei die Urheberrechtsverarbeitungsanfrage spezifisch eine Lizenzverteilungsanfrage ist und die Lizenzverteilungsanfrage eine Kennung einer Produkttransaktion, die ein Produkt trägt, zu dem eine auszustellende Lizenz gehört, und eine Unterschrift eines Eigentümers der Lizenz vor der Verteilung umfasst; und das Prüfen der Urheberrechtsverarbeitungsanfrage spezifisch Folgendes umfasst: Bestimmen, gemäß der Kennung der Produkttransaktion des Produkts, zu dem die auszustellende Lizenz gehört, dass das Produkt nicht aufgegeben ist; und Bestimmen, gemäß einer Unterschrift eines Produkteigentümers, dem das Produkt gehört, dass einem Eigentümer des Urheberrechts das Produkt gehört.

19. Verfahren nach Anspruch 18, wobei das Aufbauen einer Urheberrechtsverwaltungstransaktion spezifisch Folgendes umfasst:
Setzen von Eingabeinhalt, der in einer Lizenztransaktion enthalten ist, auf die Transaktionskennung der Produkttransaktion, die das Produkt trägt, und die Unterschrift des Produkteigentümers, und Setzen von Ausgabeinhalt auf eine Adresse eines Eigentümers der ausgestellten Lizenz.

## Revendications

1. Système de gestion de droit d'auteur, comprenant au moins un appareil de chaîne de blocs et un appareil de chaîne de blocs persistant, dans lequel l'appareil de chaîne de blocs est configuré pour recevoir une demande de traitement de droit d'auteur, construire une transaction de gestion de droit d'auteur selon la demande de traitement de droit d'auteur et envoyer la transaction de gestion de droit d'auteur à l'appareil de chaîne de blocs persistant ; et
l'appareil de chaîne de blocs persistant est configuré pour recevoir la transaction de gestion de droit d'auteur envoyée par l'appareil de chaîne de blocs, construire la transaction de gestion de droit d'auteur dans un bloc et stocker le bloc dans une chaîne de blocs pour traitement, dans lequel la chaîne de blocs est stockée dans tous les appareils de chaîne de blocs dans un réseau ;
dans lequel la demande de traitement de droit d'auteur est une demande d'enregistrement de droit d'auteur, une demande de transfert de droit d'auteur, une demande de création de produit, une demande d'abandon de produit, une demande de distribution de licence ou une demande de délivrance de licence ;
dans lequel le système est **caractérisé en ce que** la transaction de gestion de droit d'auteur est classée en une transaction de droit d'auteur, une transaction de produit ou une transaction de licence ; et
**en ce que** l'appareil de chaîne de blocs est spécifiquement configuré pour : lorsque la demande de traitement de droit d'auteur est spécifiquement une demande de distribution de licence, déterminer, selon un identifiant d'une transaction de produit d'un produit auquel appartient la licence à délivrer, que le produit n'est pas abandonné ; et déterminer, selon une signature d'un titulaire de produit qui possède le produit, qu'un titulaire d'un droit d'auteur possède le produit, dans lequel la demande de distribution de licence comprend l'identifiant de la transaction de produit portant le produit auquel appartient la licence à délivrer et une signature d'un titulaire de la licence avant la distribution.

2. Système selon la revendication 1, dans lequel l'appareil de chaîne de blocs persistant est présélectionné parmi tous les appareils de chaîne de blocs ; l'appareil de chaîne de blocs persistant est spécifiquement configuré pour envoyer la transaction de gestion de droit d'auteur à tous les appareils de chaîne de blocs dans le réseau avant la construction de la transaction de gestion de droit d'auteur dans le bloc, de sorte que tous les appareils de chaîne de blocs vérifient la transaction de gestion de droit d'auteur ; et
l'appareil de chaîne de blocs persistant est spécifiquement configuré pour : avant le stockage du bloc dans la chaîne de blocs pour traitement, envoyer le bloc construit à tous les appareils de chaîne de blocs pour effectuer une vérification de bloc, dans lequel le bloc comprend un identifiant d'un bloc précédent lié dans des données de chaîne de blocs, une heure à laquelle le bloc est généré et la transaction de gestion de droit d'auteur ; et recevoir des réponses de vérification de bloc renvoyées par tous les appareils de chaîne de blocs dans le réseau, et déterminer, selon les réponses de vérification de bloc reçues, que la vérification de bloc est réussie.

3. Système selon la revendication 1, dans lequel l'appareil de chaîne de blocs persistant est périodiquement sélectionné parmi tous les appareils de chaîne de blocs, dans lequel l'appareil de chaîne de blocs est en outre configuré pour envoyer la transaction de gestion de droit d'auteur à tous les appareils de chaîne de blocs dans le réseau à l'exception de l'appareil de chaîne de blocs lui-même, recevoir au moins une transaction de gestion de droit d'auteur envoyée par l'un quelconque ou une pluralité d'appareils de chaîne de blocs, et vérifier la transaction de gestion de droit d'auteur ; et
l'appareil de chaîne de blocs persistant est spécifiquement configuré pour recevoir au moins une transaction de gestion de droit d'auteur envoyée par l'un quelconque ou une pluralité d'appareils de chaîne de blocs, et vérifier la transaction de gestion de droit d'auteur ; après avoir été sélectionné pour être l'appareil de chaîne de blocs persistant, créer une transaction de sélection ; et lors de la création d'un bloc, construire ensemble la transaction de sélection et la transaction de gestion de droit d'auteur dans le bloc.

4. Système selon la revendication 1, dans lequel l'appareil de chaîne de blocs est spécifiquement configuré pour : lorsque la demande de traitement de droit d'auteur est spécifiquement une demande d'enregistrement de droit d'auteur, déterminer que le contenu compris dans la demande d'enregistrement de droit d'auteur est complet ; et déterminer, selon un identifiant de contenu numérique, qu'un droit d'auteur n'est pas enregistré, dans lequel la demande d'enregistrement de droit d'auteur comprend une adresse d'un titulaire du droit d'auteur, des informations d'identité d'un créateur, des informations d'identité du titulaire du droit d'auteur, des informations de base sur le contenu numérique, des descriptions d'une situation des droits du contenu numérique et l'identifiant de contenu numérique.

5. Système selon la revendication 4, dans lequel l'appareil de chaîne de blocs est en outre spécifiquement configuré pour définir le contenu d'entrée compris dans la transaction de gestion de droit d'auteur comme nul, et définir le contenu de sortie comme l'adresse du titulaire du droit d'auteur dans l'enregistrement de droit d'auteur.

6. Système selon la revendications 1, dans lequel l'appareil de chaîne de blocs est spécifiquement configuré pour : lorsque la demande de traitement de droit d'auteur est spécifiquement une demande de transfert de droit d'auteur, déterminer, selon un identifiant d'une transaction de droit d'auteur du droit d'auteur à transférer, que le droit d'auteur n'est pas transféré, et déterminer, selon une signature d'un titulaire du droit d'auteur, que le titulaire du droit d'auteur possède le droit d'auteur, dans lequel la demande de transfert de droit d'auteur comprend l'identifiant de la transaction du droit d'auteur à transférer et la signature du titulaire du droit d'auteur.

7. Système selon la revendication 6, dans lequel l'appareil de chaîne de blocs est spécifiquement configuré pour définir un contenu d'entrée compris dans la transaction de gestion de droit d'auteur comme l'identifiant de transaction de la transaction de droit d'auteur portant le droit d'auteur avant le transfert du droit d'auteur et la signature du titulaire du droit d'auteur avant le transfert du droit d'auteur, et définir un contenu de sortie comme l'adresse d'un titulaire du droit d'auteur après le transfert du droit d'auteur.

8. Système selon la revendication 1, dans lequel l'appareil de chaîne de blocs est spécifiquement configuré pour définir un contenu d'entrée compris dans une transaction de licence comme l'identifiant de transaction de la transaction de produit portant le produit et la signature du titulaire de produit, et définir un contenu de sortie comme l'adresse d'un titulaire de la licence délivrée.

9. Procédé de gestion de droit d'auteur sur un contenu numérique, comprenant :
la réception d'une demande de traitement de droit d'auteur et
la construction d'une transaction de gestion de droit d'auteur selon la demande de traitement de droit d'auteur ; et
le stockage de la transaction de gestion de droit d'auteur dans une chaîne de blocs pour traitement, dans lequel la chaîne de blocs est stockée dans tous les appareils de chaîne de blocs ;
dans lequel la demande de traitement de droit d'auteur est une demande d'enregistrement de droit d'auteur, une demande de transfert de droit d'auteur, une demande de création de produit, une demande d'abandon de produit, une demande de distribution de licence ou une demande de délivrance de licence ;
le procédé étant **caractérisé en ce que** la transaction de gestion de droit d'auteur est classée en une transaction de droit d'auteur, une transaction de produit ou une transaction de licence ; et
**en ce que**
lorsque la demande de traitement de droit d'auteur est spécifiquement une demande de distribution de licence, le procédé comprend en outre : la détermination, selon un identifiant d'une transaction de produit d'un produit auquel appartient la licence à délivrer, que le produit n'est pas abandonné ; et la détermination, selon une signature d'un titulaire de produit qui possède le produit, qu'un titulaire d'un droit d'auteur possède le produit, dans lequel la demande de distribution de licence comprend l'identifiant de la transaction de produit portant le produit pour lequel la licence à délivrer appartient et une signature d'un titulaire de la licence avant la distribution.

10. Procédé selon la revendication 9, dans lequel le stockage de la transaction de gestion de droit d'auteur dans une chaîne de blocs pour traitement est spécifiquement :
l'envoi de la transaction de gestion de droit d'auteur à un appareil de chaîne de blocs persistant et la vérification de la transaction de gestion de droit d'auteur, dans lequel l'appareil de chaîne de blocs persistant est présélectionné parmi tous les appareils de chaîne de blocs ;
lors de la vérification d'au moins une transaction de gestion de droit d'auteur, la construction, par l'appareil de chaîne de blocs persistant, de l'au moins une transaction de gestion de droit d'auteur dans un bloc, et l'envoi du bloc construit à tous les appareils de chaîne de blocs dans un réseau de confiance pour effectuer une vérification de bloc, dans lequel le bloc comprend un identifiant d'un bloc précédent lié dans des données de chaîne de blocs, une heure à laquelle le bloc est généré, et l'au moins une transaction de gestion de droit d'auteur ;
la réception, par l'appareil de chaîne de blocs persistant, de réponses de vérification de bloc renvoyées par tous les appareils de chaîne de blocs à l'exception de l'appareil de chaîne de blocs persistant ;
la détermination, par l'appareil de chaîne de blocs persistant selon les réponses de vérification de bloc reçues, que la vérification de bloc est réussie, et le stockage du bloc dans la chaîne de blocs ; et
le fait d'ordonner, par l'appareil de chaîne de blocs persistant, à tous les appareils de chaîne de blocs dans le réseau de synchroniser le bloc stocké.

11. Procédé selon la revendication 9, dans lequel le stockage de la transaction de gestion de droit d'auteur dans une chaîne de blocs pour traitement est spécifiquement :
l'envoi de la transaction de gestion de droit d'auteur à tous les autres appareils de chaîne de blocs dans un réseau ;
la sélection, parmi tous les appareils de chaîne de blocs, d'un appareil de chaîne de blocs pour qu'il soit un appareil de chaîne de blocs persistant, et la création d'une transaction de sélection ;
la construction, par l'appareil de chaîne de blocs persistant, d'au moins une transaction de gestion de droit d'auteur et la transaction de sélection dans un bloc, et le stockage du bloc dans la chaîne de blocs actuelle ; et
le fait d'ordonner, par l'appareil de chaîne de blocs persistant, à tous les appareils de chaîne de blocs dans le réseau de synchroniser le bloc stocké.

12. Procédé selon la revendication 9, dans lequel la demande de traitement de droit d'auteur est spécifiquement une demande d'enregistrement de droit d'auteur, et la demande d'enregistrement de droit d'auteur comprend une adresse d'un titulaire d'un droit d'auteur, des informations d'identité d'un créateur, des informations d'identité du titulaire du droit d'auteur, des informations de base sur le contenu numérique, des descriptions sur la situation des droits d'une œuvre et un identifiant de contenu numérique ; et
la vérification de la demande de traitement de droit d'auteur comprend spécifiquement : la détermination que le contenu compris dans la demande d'enregistrement de droit d'auteur est complet ; et la détermination, selon l'identifiant de contenu numérique, que le droit d'auteur n'est pas enregistré.

13. Procédé selon la revendication 12, dans lequel la construction d'une transaction de gestion de droit d'auteur comprend spécifiquement :
la définition d'un contenu d'entrée compris dans la transaction de gestion de droit d'auteur comme nul, et la définition d'un contenu de sortie comme l'adresse du titulaire du droit d'auteur dans l'enregistrement de droit d'auteur.

14. Procédé selon la revendication 9, dans lequel la demande de traitement de droit d'auteur est spécifiquement une demande de transfert de droit d'auteur, et la demande de transfert de droit d'auteur comprend un identifiant d'une transaction de droit d'auteur d'un droit d'auteur à transférer et une signature d'un titulaire du droit d'auteur ; et
la vérification de la demande de traitement de droit d'auteur comprend spécifiquement : la détermination, selon l'identifiant de la transaction du droit d'auteur à transférer, que le droit d'auteur n'est pas transféré, et la détermination, selon la signature du titulaire du droit d'auteur, que le titulaire du droit d'auteur possède le droit d'auteur.

15. Procédé selon la revendication 14, dans lequel la construction d'une transaction de gestion de droit d'auteur comprend spécifiquement :
la définition d'un contenu d'entrée compris dans la transaction de gestion de droit d'auteur comme l'identifiant de transaction de la transaction de droit d'auteur portant le droit d'auteur avant le transfert du droit d'auteur et la signature du titulaire du droit d'auteur avant le transfert du droit d'auteur, et la définition d'un contenu de sortie comme l'adresse d'un titulaire du droit d'auteur après le transfert du droit d'auteur.

16. Procédé selon la revendication 9, dans lequel la demande de traitement de droit d'auteur est spécifiquement une demande de délivrance de licence, et la demande de délivrance de licence comprend un identifiant d'une transaction de produit portant un produit auquel appartient une licence à délivrer et une signature d'un titulaire de produit qui possède le produit ; et la vérification de la demande de traitement de droit d'auteur comprend spécifiquement : la détermination, selon l'identifiant de la transaction de produit portant le produit auquel appartient la licence à délivrer, que le produit n'est pas abandonné ; et la détermination, selon la signature du titulaire de produit qui possède le produit, qu'un titulaire du droit d'auteur possède le produit.

17. Procédé selon la revendication 16, dans lequel la construction d'une transaction de gestion de droit d'auteur comprend spécifiquement :
la définition d'un contenu d'entrée compris dans une transaction de licence comme l'identifiant de transaction de la transaction de produit portant le produit et la signature du titulaire de produit, et la définition d'un contenu de sortie comme l'adresse d'un titulaire de la licence délivrée.

18. Procédé selon la revendication 9, dans lequel la demande de traitement de droit d'auteur est spécifiquement une demande de distribution de licence, et la demande de distribution de licence comprend un identifiant d'une transaction de produit portant un produit auquel appartient une licence à délivrer et une signature d'un titulaire de la licence avant la distribution ; et
la vérification de la demande de traitement de droit d'auteur comprend spécifiquement : la détermination, selon l'identifiant de la transaction de produit du produit auquel appartient la licence à délivrer, que le produit n'est pas abandonné ; et la détermination, selon une signature d'un titulaire de produit qui possède le produit, qu'un titulaire du droit d'auteur possède le produit.

19. Procédé selon la revendication 18, dans lequel la construction d'une transaction de gestion de droit d'auteur comprend spécifiquement :
la définition d'un contenu d'entrée compris dans une transaction de licence comme l'identifiant de transaction de la transaction de produit portant le produit et la signature du titulaire de produit, et la définition d'un contenu de sortie comme l'adresse d'un titulaire de la licence délivrée.
